# EUROPEAN PATENT APPLICATION

(11) **EP 4 841 913 A1**
(43) Date of publication of application: **18.11.2026**
(21) Application number: 25739123.5
(22) Date of filing: 10.01.2025
(51) Int. Cl.: H04B 7/185, H04W 84/06, H04W 72/1268, H04L 1/08, H04L 27/26, H04W 72/21, H04L 5/00, H04W 72/23, H04W 8/24

(54) **METHOD AND DEVICE FOR PERFORMING COMMUNICATION IN WIRELESS COMMUNICATION SYSTEM**

(30) Priority: 10.01.2024 KR 20240004244; 16.01.2024 KR 20240006850
(71) Applicant: LG Electronics Inc., Yeongdeungpo-gu Seoul 07336 (KR)
(72) Inventor: PARK, Hanjun, Seoul 06772 (KR); LEE, Seungmin, Seoul 06772 (KR); HWANG, Daesung, Seoul 06772 (KR)
(74) Representative: Frenkel, Matthias Alexander
(86) International application number: PCT/KR2025/000602
(87) International publication number: WO 2025/150963

(57) **Abstract**

Provided are a method by which a device performs wireless communication and the device for supporting same. The method may comprise the steps of: acquiring information related to an orthogonal cover code; and performing uplink shared channel repetition on the basis of the orthogonal cover code. For example, the orthogonal cover code can be applied between the uplink shared channel repetitions. For example, on the basis that at least one of the uplink shared channel repetitions and an uplink control channel overlap, uplink control information related to the uplink control channel can be multiplexed on an uplink shared channel.

## Description

### TECHNICAL FIELD

This disclosure relates to a wireless communication system.

### BACKGROUND ART

5G NR is a successor technology to long term evolution (LTE) and is a new clean-slate mobile communication system with characteristics such as high performance, low latency, high availability, etc. 5G NR may utilize all available spectrum resources, including low-frequency bands below 1 GHz, mid-frequency bands between 1 GHz and 10 GHz, high-frequency (millimeter wave) bands above 24 GHz, etc.

A 6G (wireless communication) system has purposes such as (i) very high data rate per device, (ii) a very large number of connected devices, (iii) global connectivity, (iv) very low latency, (v) decrease in energy consumption of battery-free internet of things (IoT) devices, (vi) ultra-reliable connectivity, (vii) connected intelligence with machine learning capacity, etc. The vision of the 6G system may include four aspects such as intelligent connectivity, deep connectivity, holographic connectivity and ubiquitous connectivity, and the 6G system may satisfy the requirements shown in Table 1 below. For example, Table 1 shows the requirements of the 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL PROBLEM

The present disclosure provides a method and device capable of effectively providing services in a wireless communication system. In particular, the present disclosure provides a method and device for communication.

### TECHNICAL SOLUTION

Based on an embodiment of the present disclosure, a method may be provided. For example, the method may include: obtaining information related to an orthogonal cover code; and performing uplink shared channel repetition(s) based on the orthogonal cover code. For example, the orthogonal cover code may be applied between the uplink shared channel repetition(s). For example, based on overlapping between at least one of the uplink shared channel repetition(s) and an uplink control channel, uplink control information related to the uplink control channel may be multiplexed on an uplink shared channel.

Based on an embodiment of the present disclosure, a device may be provided. For example, the device may include: at least one transceiver; at least one processor; and at least one memory connected to the at least one processor and storing instructions. For example, the instructions, based on being executed by the at least one processor, may cause the device to perform operations comprising: obtaining information related to an orthogonal cover code; and performing uplink shared channel repetition(s) based on the orthogonal cover code. For example, the orthogonal cover code may be applied between the uplink shared channel repetition(s). For example, based on overlapping between at least one of the uplink shared channel repetition(s) and an uplink control channel, uplink control information related to the uplink control channel may be multiplexed on an uplink shared channel.

Based on an embodiment of the present disclosure, a processing device adapted to control a device may be provided. For example, the processing device may include: at least one processor; and at least one memory connected to the at least one processor and storing instructions. For example, the instructions, based on being executed by the at least one processor, may cause the device to perform operations comprising: obtaining information related to an orthogonal cover code; and performing uplink shared channel repetition(s) based on the orthogonal cover code. For example, the orthogonal cover code may be applied between the uplink shared channel repetition(s). For example, based on overlapping between at least one of the uplink shared channel repetition(s) and an uplink control channel, uplink control information related to the uplink control channel may be multiplexed on an uplink shared channel.

Based on an embodiment of the present disclosure, a non-transitory computer-readable storage medium storing instructions may be provided. For example, the instructions, when executed, may cause a device to perform operations comprising: obtaining information related to an orthogonal cover code; and performing uplink shared channel repetition(s) based on the orthogonal cover code. For example, the orthogonal cover code may be applied between the uplink shared channel repetition(s). For example, based on overlapping between at least one of the uplink shared channel repetition(s) and an uplink control channel, uplink control information related to the uplink control channel may be multiplexed on an uplink shared channel.

Based on an embodiment of the present disclosure, a method may be provided. For example, the method may include: transmitting information related to an orthogonal cover code; and receiving uplink shared channel repetition(s) based on the orthogonal cover code. For example, the orthogonal cover code may be applied between the uplink shared channel repetition(s). For example, based on overlapping between at least one of the uplink shared channel repetition(s) and an uplink control channel, uplink control information related to the uplink control channel may be multiplexed on an uplink shared channel.

Based on an embodiment of the present disclosure, a base station may be provided. For example, the base station may include: at least one transceiver; at least one processor; and at least one memory connected to the at least one processor and storing instructions. For example, the instructions, based on being executed by the at least one processor, may cause the base station to perform operations comprising: transmitting information related to an orthogonal cover code; and receiving uplink shared channel repetition(s) based on the orthogonal cover code. For example, the orthogonal cover code may be applied between the uplink shared channel repetition(s). For example, based on overlapping between at least one of the uplink shared channel repetition(s) and an uplink control channel, uplink control information related to the uplink control channel may be multiplexed on an uplink shared channel.

Based on an embodiment of the present disclosure, a processing device adapted to control a base station may be provided. For example, the processing device may include: at least one processor; and at least one memory connected to the at least one processor and storing instructions. For example, the instructions, based on being executed by the at least one processor, may cause the base station to perform operations comprising: transmitting information related to an orthogonal cover code; and receiving uplink shared channel repetition(s) based on the orthogonal cover code. For example, the orthogonal cover code may be applied between the uplink shared channel repetition(s). For example, based on overlapping between at least one of the uplink shared channel repetition(s) and an uplink control channel, uplink control information related to the uplink control channel may be multiplexed on an uplink shared channel.

Based on an embodiment of the present disclosure, a non-transitory computer-readable storage medium storing instructions may be provided. For example, the instructions, when executed, may cause a base station to perform operations comprising: transmitting information related to an orthogonal cover code; and receiving uplink shared channel repetition(s) based on the orthogonal cover code. For example, the orthogonal cover code may be applied between the uplink shared channel repetition(s). For example, based on overlapping between at least one of the uplink shared channel repetition(s) and an uplink control channel, uplink control information related to the uplink control channel may be multiplexed on an uplink shared channel.

### ADVANTAGEOUS EFFECTS

The present disclosure may provide a method and device capable of effectively providing services in a wireless communication system. For example, through embodiments proposed by the present disclosure, communication may be efficiently performed.

### BRIEF DESCRIPTION OF THE DRAWINGS

FIG. 1 shows a communication procedure between devices based on an embodiment of the present disclosure.
FIG. 2 shows a radio protocol architecture, based on an embodiment of the present disclosure.
FIG. 3 shows a structure of a radio frame, based on an embodiment of the present disclosure.
FIG. 4 shows a slot structure of a frame, based on an embodiment of the present disclosure.
FIG. 5 shows an example of a BWP, based on an embodiment of the present disclosure.
FIG. 6 shows a communication structure provideable in a 6G system, based on an embodiment of the present disclosure.
FIG. 7 shows an example of a communication scenario based on a 6G system, based on an embodiment of the present disclosure.
FIG. 8 shows a procedure for uplink transmission and reception, based on an embodiment of the present disclosure.
FIG. 9 shows an example of OCC with PUSCH repetition Type A, based on an embodiment of the present disclosure.
FIG. 10 shows an example of multiplexing for UCI, based on an embodiment of the present disclosure.
FIG. 11 shows an example of multiplexing for UCI, based on an embodiment of the present disclosure.
FIG. 12 shows an example of multiplexing for UCI, based on an embodiment of the present disclosure.
FIG. 13 shows a method for a device to perform wireless communication, based on an embodiment of the present disclosure.
FIG. 14 shows a method for a base station to perform wireless communication, based on an embodiment of the present disclosure.
FIG. 15 shows a communication system 1, based on an embodiment of the present disclosure.
FIG. 16 shows wireless devices, based on an embodiment of the present disclosure.
FIG. 17 shows a signal process circuit for a transmission signal, based on an embodiment of the present disclosure.
FIG. 18 shows another example of a wireless device, based on an embodiment of the present disclosure.
FIG. 19 shows a hand-held device, based on an embodiment of the present disclosure.
FIG. 20 shows a vehicle or an autonomous vehicle, based on an embodiment of the present disclosure.

### MODE FOR INVENTION

In the present disclosure, "A or B" may mean "only A", "only B" or "both A and B". In other words, in the present disclosure, "A or B" may be interpreted as "A and/or B". For example, in the present disclosure, "A, B or C" may mean "only A", "only B", "only C", or "any combination of A, B and C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

In the present disclosure, the term "configured or defined" may be interpreted as being pre-configured or configured to a device through pre-defined signaling (e.g., SIB, MAC, RRC, downlink control information (DCI), etc.) from a base station or a network. In the present disclosure, the term "configured or defined" may be interpreted as being pre-configured or configured to a device through pre-defined signaling (e.g., MAC, RRC, sidelink control information (SCI), control information signaled between devices, etc.) from another device. In the present disclosure, the term "configured or defined" may be interpreted as being pre-configured to a device.

In the present disclosure, a user equipment (UE) may refer to a device, a portable device, a wireless device, etc. In the present disclosure, a base station (BS) may refer to a radio access network (RAN) node, a non-terrestrial network (NTN) cell/node, a transmission reception point (TRP), a network, an integrated access and backhaul (IAB) node, a device, a portable device, a wireless device, etc.

The technology proposed in the present disclosure may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA2000. The TDMA may be implemented with a radio technology, such as global system for mobile communications (GSM)/general packet radio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802-20, evolved UTRA (E-UTRA), long term evolution (LTE), 5G NR, and so on.

The technology proposed in the present disclosure may be implemented as 6G wireless technology and may be applied to various 6G systems. For example, the 6G system may have key factors such as enhanced mobile broadband (eMBB), ultra-reliable low latency communications (URLLC), massive machine type communications (mMTC), artificial intelligence (AI) integrated communication, tactile internet, high throughput, high network capacity, high energy efficiency, low backhaul and access network congestion, and enhanced data security.

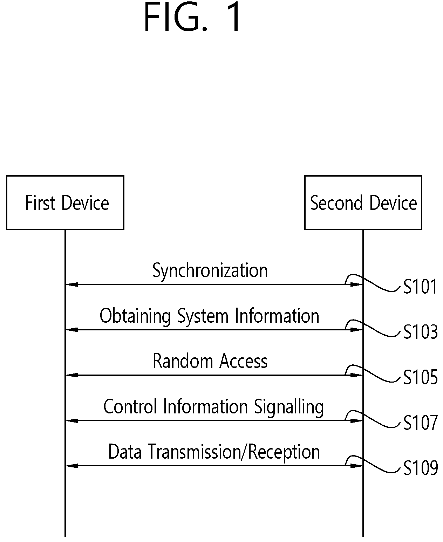

FIG. 1 shows a communication procedure between devices based on an embodiment of the present disclosure. The embodiment of FIG. 1 may be combined with various embodiments of the present disclosure.

Referring to FIG. 1, in step S101, a first device and a second device may perform synchronization. For example, the first device may be at least one of a UE and/or a device proposed in the present disclosure. For example, the second device may be at least one of a base station, a network, a RAN node, an NTN node/cell, a TRP, a UE, and/or a device proposed in the present disclosure. For example, the first device may perform an initial cell search operation. For example, the first device may detect at least one synchronization signal transmitted based on a rule pre-defined by the second device. Herein, for example, the synchronization signal may include a plurality of synchronization signals (e.g., a primary synchronization signal, a secondary synchronization signal, etc.) classified based on a structure or a purpose. By this, the first device may check a boundary of a frame, a subframe, a time unit, a slot and/or a symbol of the second device, and the first device may obtain information (e.g., a cell identifier) for the second device.

In step S103, the first device may obtain system information transmitted by the second device. For example, the system information may include information related to attributes, characteristics, and/or capabilities of the second device required to access the second device and use a service. For example, the system information may be classified based on content (e.g., whether it is essentially required for access), a transmission structure (e.g., a used channel, whether it is provided based on on-demand), etc. For example, the system information may be classified into a master information block (MIB) and a system information block (SIB). For example, as needed, the first device may transmit a signal requesting the system information prior to receiving the system information. For example, a request and provision of the system information may be performed after a random access procedure to be described later.

In step S105, the first device and the second device may perform a random access procedure. For example, the first device may transmit and/or receive at least one message (e.g., a random access preamble, a random access response message, etc.) for the random access procedure, based on information related to a random access channel of the second device (e.g., a channel position, a channel structure, a structure of a supported preamble, etc.) obtained through the system information. For example, the first device may transmit a preamble (e.g., Msg1) through a random access channel, and the first device may receive a random access response message (e.g., Msg2), and the first device may transmit a message (e.g., Msg3) including information related to the first device (e.g., identification information) to the second device by using scheduling information included in the random access response message, and the first device may receive a message (e.g., Msg4) for contention resolution and/or connection establishment. For example, Msg1 and Msg3 may be transmitted and received as one message (e.g., MsgA), and/or Msg2 and Msg4 may be transmitted and received as one message (e.g., MsgB).

In step S107, the first device and the second device may perform signaling of control information. Herein, for example, the control information may be defined in various layers such as a layer controlling a connection (e.g., a radio resource control (RRC) layer), a layer processing mapping between a logical channel and a transport channel (e.g., a media access control (MAC) layer), a layer processing a physical channel (e.g., a physical (PHY) layer), etc. For example, the first device and the second device may perform at least one of signaling for establishing a connection, signaling for determining a configuration related to communication, and/or signaling for indicating allocated resources. For example, the control information may be signaled/transmitted through a control channel. For example, the control information and/or the control channel may be used in scheduling at least one of data, a data channel (e.g., a shared channel), and/or control information on the data channel.

In step S109, the first device and the second device may transmit and/or receive data. For example, the first device and the second device may process data based on the signaling of the control information, and transmit and/or receive the data. For example, in a case of transmitting data, the first device or the second device may perform at least one of channel encoding, rate matching, scrambling, constellation mapping, layer mapping, waveform modulation, antenna mapping, and/or resource mapping for information bits. For example, in a case of receiving data, the first device or the second device may perform at least one of signal extraction from a resource, waveform demodulation for each antenna, signal arrangement considering layer mapping, constellation demapping, descrambling, and/or channel decoding.

For example, layers of a radio interface protocol between the first device and the second device may be classified into a first layer (layer 1, L1), a second layer (layer 2, L2), a third layer (layer 3, L3), etc. For example, a physical layer belonging to the first layer may provide an information transfer service using a physical channel, and a radio resource control (RRC) layer located in the third layer may perform a role of controlling radio resources between the first device and the second device. To this end, for example, the RRC layer may exchange an RRC message between the first device and the second device.

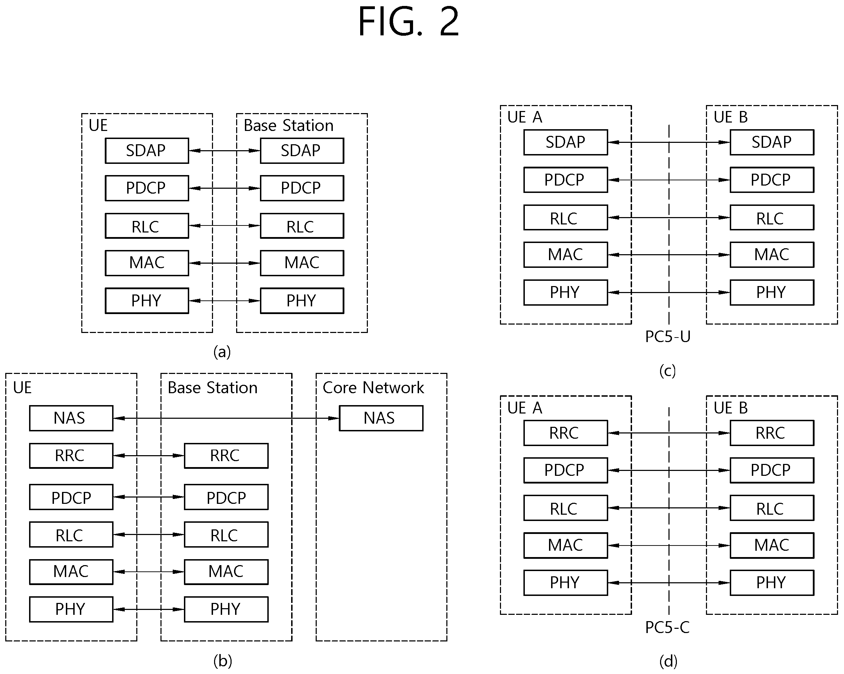

FIG. 2 shows a radio protocol architecture, based on an embodiment of the present disclosure. The embodiment of FIG. 2 may be combined with various embodiments of the present disclosure. For example, (a) of FIG. 2 may show a radio protocol stack of a user plane for uplink communication or downlink communication, and (b) of FIG. 2 may show a radio protocol stack of a control plane for uplink communication or downlink communication. For example, (c) of FIG. 2 may show a radio protocol stack of a user plane for inter-device communication, and (d) of FIG. 2 may show a radio protocol stack of a control plane for inter-device communication.

For example, the physical layer may provide an information transfer service to a higher layer using a physical channel. For example, the physical layer may be connected with a medium access control (MAC) layer, which is a higher layer, through a transport channel. For example, data may be transferred between the MAC layer and the physical layer through the transport channel. For example, the transport channel may be classified based on how and with what characteristics data is transmitted through a radio interface. For example, data may be transmitted through a physical channel between different physical layers, e.g., between physical layers of the first device and the second device. For example, the physical channel may be modulated in an orthogonal frequency division multiplexing (OFDM) scheme, and time and frequency may be utilized as radio resources.

For example, the MAC layer may provide a service to a radio link control (RLC) layer, which is a higher layer, through a logical channel. For example, the MAC layer may provide a mapping function from a plurality of logical channels to a plurality of transport channels. For example, the MAC layer may provide a logical channel multiplexing function by mapping from a plurality of logical channels to a single transport channel. For example, a MAC sub-layer may provide a data transmission service on a logical channel.

For example, the RLC layer may perform concatenation, segmentation, and reassembly of an RLC service data unit (SDU). For example, in order to guarantee various quality of service (QoS) required by a radio bearer (RB), the RLC layer may provide three operation modes of transparent mode (TM), unacknowledged mode (UM), and acknowledged mode (AM). For example, an AM RLC may provide error correction through an automatic repeat request (ARQ).

For example, the radio resource control (RRC) layer may be defined only in the control plane. For example, the RRC layer may serve to control the logical channel, the transport channel, and the physical channel in relation to configuration, reconfiguration, and release of radio bearers. For example, the RB may refer to a logical path provided by the first layer (e.g., the physical layer) and the second layer (e.g., the MAC layer, the RLC layer, a packet data convergence protocol (PDCP) layer, a service data adaptation protocol (SDAP) layer, etc.) for data delivery between the first device and the second device.

For example, a function of the PDCP layer in the user plane may include delivery of user data, header compression, and ciphering. For example, a function of the PDCP layer in the control plane may include delivery of control plane data and ciphering/integrity protection.

For example, the configuration of the RB may imply a process for specifying a radio protocol layer and channel properties to provide a particular service and for configuring each specific parameter and operation method. For example, the RB may be divided into two types: a signaling radio bearer (SRB) and a data radio bearer (DRB). For example, the SRB may be used as a path for transmitting an RRC message in the control plane, and the DRB may be used as a path for transmitting user data in the user plane.

For example, a downlink transport channel may include at least one of a broadcast channel (BCH) transmitting system information, and/or a downlink shared channel (SCH) transmitting user traffic or a control message other than that. For example, in a case of traffic or a control message of a downlink multicast or broadcast service, it may be transmitted through the downlink SCH, or it may be transmitted through a separate downlink multicast channel (MCH). Meanwhile, an uplink transport channel may include at least one of a random access channel (RACH) transmitting an initial control message, and/or an uplink shared channel (SCH) transmitting user traffic or a control message other than that. For example, the logical channel, which is located above the transport channel and mapped to the transport channel, may include at least one of a broadcast control channel (BCCH), a paging control channel (PCCH), a common control channel (CCCH), a multicast control channel (MCCH), and/or a multicast traffic channel (MTCH).

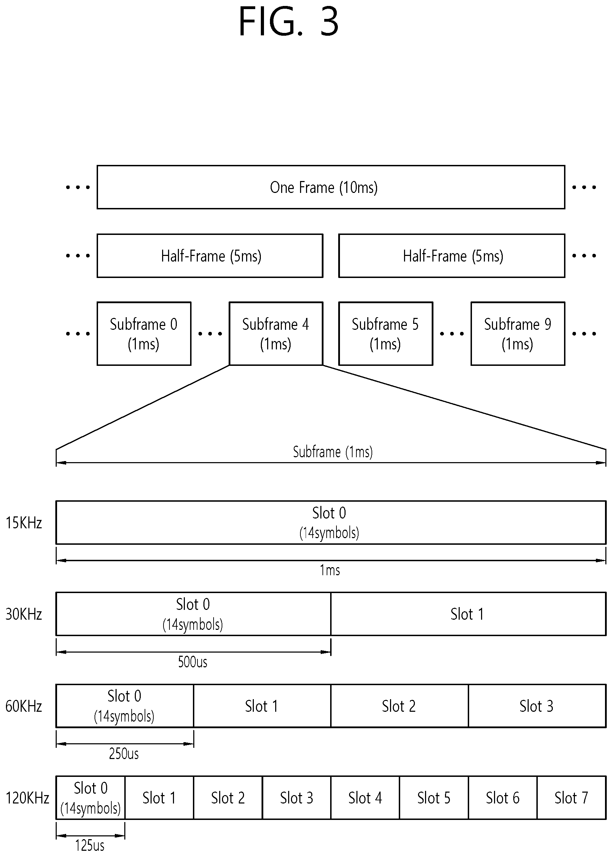

FIG. 3 shows a structure of a radio frame, based on an embodiment of the present disclosure. The embodiment of FIG. 3 may be combined with various embodiments of the present disclosure.

Referring to FIG. 3, for example, a radio frame may be used in uplink transmission, downlink transmission, and/or inter-device transmission. For example, the radio frame may have a length of 10ms, and may be defined as two 5ms half-frames (HF). For example, the half-frame may include five 1ms subframes (SF). For example, the subframe may be divided into one or more slots, and the number of slots within the subframe may be determined based on a subcarrier spacing (SCS). For example, each slot may include 12 or 14 OFDM(A) symbols based on a cyclic prefix (CP).

For example, in a case where a normal CP is used, each slot may include 14 symbols. For example, in a case where an extended CP is used, each slot may include 12 symbols. Herein, for example, the symbol may include an OFDM symbol (or, a CP-OFDM symbol), and/or a single carrier-FDMA (SC-FDMA) symbol (or, a Discrete Fourier Transform-spread-OFDM (DFT-s-OFDM) symbol).

Table 2 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP or an extended CP is used.

**[Table 2]**

| CP type | SCS (15*2^{u}) | N^{slot}_{symb} | N^{frame,u}ₛₗₒₜ | N^{subframe,u}ₛₗₒₜ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

For example, between a plurality of cells aggregated to one UE, OFDM(A) numerologies (e.g., SCS, CP length, etc.) may be configured differently. Accordingly, an (absolute time) duration of a time resource (e.g., subframe, slot, or transmit time interval (TTI)) configured with the same number of symbols may be configured differently between the aggregated cells. For example, in the present disclosure, a time resource such as a subframe, a slot, a TTI, etc. may be referred to as a time unit.

For example, a plurality of numerologies or SCSs may be supported to support various services. For example, in a case where the SCS is 15kHz, a wide area in conventional cellular bands may be supported, and in a case where the SCS is 30kHz/60kHz, a dense-urban, a lower latency, and a wider carrier bandwidth may be supported. For example, in a case where the SCS is 60kHz or higher than that, a bandwidth greater than 24.25GHz may be supported to overcome phase noise.

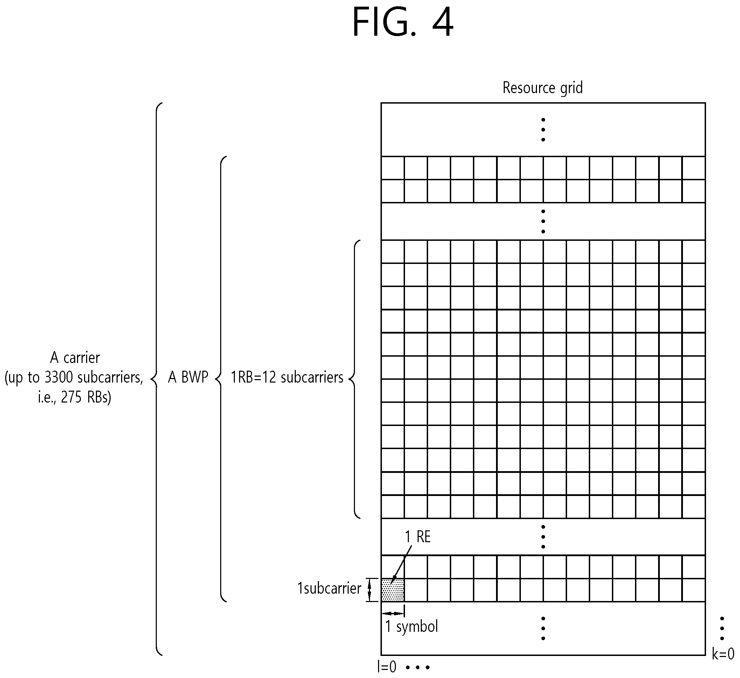

FIG. 4 shows a slot structure of a frame, based on an embodiment of the present disclosure. The embodiment of FIG. 4 may be combined with various embodiments of the present disclosure.

Referring to FIG. 4, for example, a slot may include a plurality of symbols in a time domain. For example, a carrier may include a plurality of subcarriers in a frequency domain. For example, a resource block (RB) may be defined as a plurality of consecutive subcarriers in the frequency domain. For example, a bandwidth part (BWP) may be defined as a plurality of consecutive (physical) resource blocks ((P)RB) in the frequency domain, and may correspond to one numerology (e.g., SCS, CP length, etc.). For example, a carrier may include a maximum of N BWPs (where N is a positive integer). For example, data communication may be performed through an activated BWP. For example, each element may be referred to as a resource element (RE) in a resource grid, and one complex symbol may be mapped to each element.

For example, a BWP may be a set of consecutive PRBs in a given numerology. For example, a PRB may be selected from a subset of consecutive common resource blocks (CRB) for a given numerology on a given carrier.

For example, a BWP may be at least one of an active BWP, an initial BWP, and/or a default BWP. For example, a UE may not monitor a downlink radio link quality in a DL BWP other than an active DL BWP on a primary cell (PCell). For example, the UE may not receive a physical downlink control channel (PDCCH), a physical downlink shared channel (PDSCH), or a channel state information-reference signal (CSI-RS) (excluding radio resource management (RRM)) outside the active DL BWP. For example, the UE may not trigger a channel state information (CSI) report for an inactive DL BWP. For example, the UE may not transmit a physical uplink control channel (PUCCH) or a physical uplink shared channel (PUSCH) outside an active UL BWP. For example, in a case of downlink, an initial BWP may be given as a set of consecutive resource blocks (RB) for a remaining minimum system information (RMSI) control resource set (CORESET) (configured by a physical broadcast channel (PBCH)). For example, in a case of uplink, an initial BWP may be given by a system information block (SIB) for a random access procedure. For example, a default BWP may be configured by a higher layer. For example, an initial value of the default BWP may be an initial DL BWP. For energy saving, if the UE does not detect downlink control information (DCI) for a certain period of time, the UE may switch the active BWP of the UE to the default BWP.

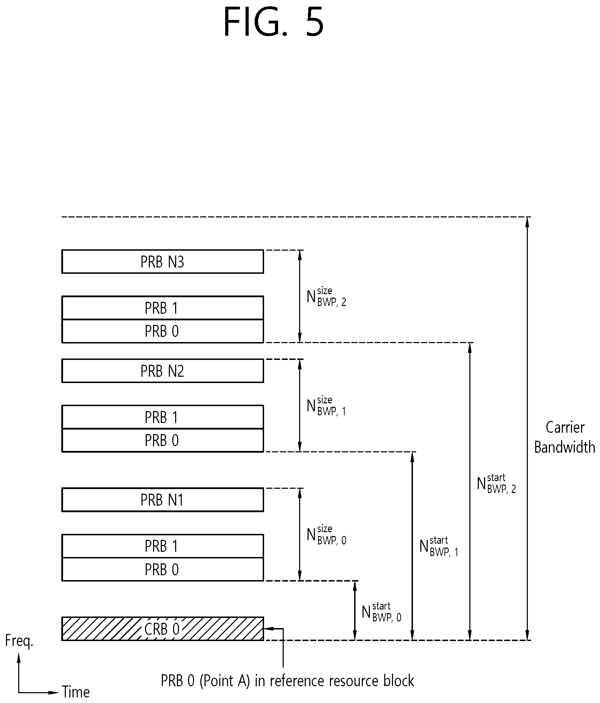

FIG. 5 shows an example of a BWP, based on an embodiment of the present disclosure. The embodiment of FIG. 5 may be combined with various embodiments of the present disclosure. In the embodiment of FIG. 5, it is assumed that there are three BWPs.

Referring to FIG. 5, for example, a common resource block (CRB) may be a carrier resource block numbered from one end of a carrier band to the other end thereof, and a PRB may be a resource block numbered within each BWP. For example, Point A may indicate a common reference point for a resource block grid.

For example, a BWP may be configured by Point A, an offset N^{start}_{BWP} from Point A, and a bandwidth N^{size}_{BWP}. For example, Point A may be an external reference point of a PRB of a carrier where subcarrier 0 of all numerologies (e.g., all numerologies supported by a network on the corresponding carrier) is aligned. For example, the offset may be a PRB interval between a lowest subcarrier and Point A in a given numerology. For example, the bandwidth may be the number of PRBs in the given numerology.

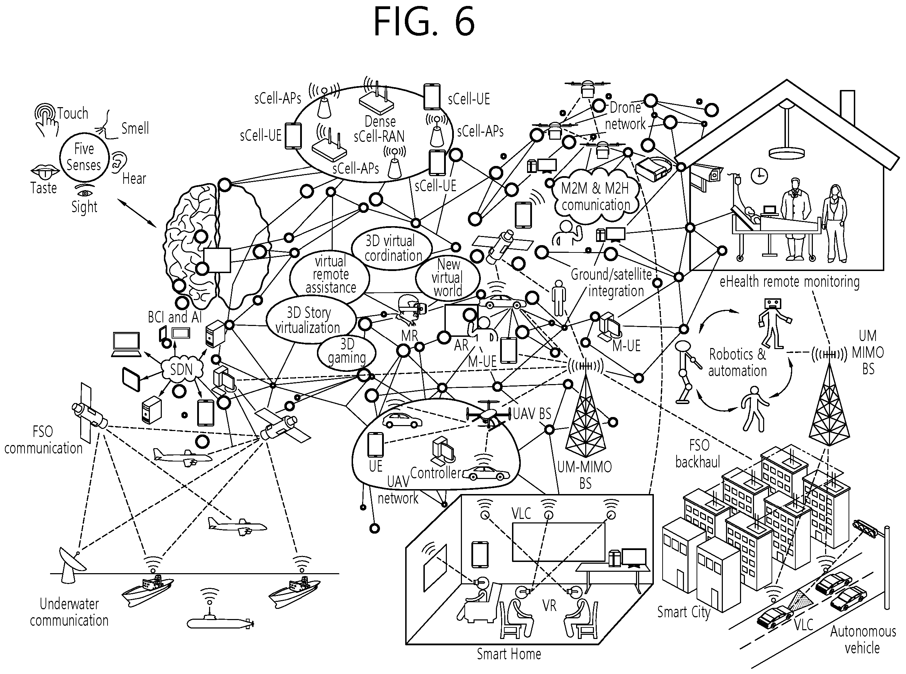

FIG. 6 shows a communication structure provideable in a 6G system, based on an embodiment of the present disclosure. The embodiment of FIG. 6 may be combined with various embodiments of the present disclosure.

As core implementation technologies of the 6G system, technologies such as artificial intelligence (AI), Terahertz (THz) communication, optical wireless technology, free space optical (FSO) backhaul network, massive multiple input multiple output (MIMO) technology, blockchain, 3D networking, quantum communication, unmanned aerial vehicle, cell-free communication, wireless information and energy transfer (WIET), integrated sensing and communication, integrated access and backhaul network, holographic beamforming, big data analytics, large intelligent surface (LIS), etc. may be adopted.
- Artificial Intelligence (AI): When AI is introduced to communication, real-time data transmission may be simplified and improved. AI may determine a method of performing complicated target tasks using countless analysis. For example, AI may increase efficiency and reduce processing delay. Operations consuming time such as handover, network selection, and resource scheduling may be immediately performed by using AI. AI may also play an important role in M2M, machine-to-human, and human-to-machine. In addition, AI may be a prompt communication in brain computer interface (BCI). An AI based communication system may be supported by metamaterial, intelligence structure, intelligence network, intelligence device, intelligence cognitive radio, self-maintaining wireless network, and machine learning.
- Terahertz (THz) communication: A data rate may increase by increasing bandwidth. This may be performed by using sub-THz communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.
- Massive MIMO technology (large-scale MIMO)
- Hologram beamforming (HBF)
- Optical wireless technology
- Free space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Advanced air mobility (AAM): AAM may be a broad concept encompassing urban air mobility (UAM), regional air mobility (RAM), and an uncrewed aerial system (UAS). For example, AAM may include UAM, RAM, UAS, an uncrewed aerial vehicle (UAV), etc.
- Autonomous driving (self-driving): Vehicle to everything (V2X) that is a core element for establishing an autonomous driving infrastructure may be a technology that vehicle communicates and shares with various elements in road for autonomous driving such as vehicle to vehicle (V2V), vehicle to infrastructure (V2I), and so on.
- Non-terrestrial network (NTN): NTN may represent a network or a network segment using radio frequency (RF) resources mounted on a satellite (or a UAS platform). Use of an NTN service may be considered to secure wider coverage or to provide a wireless communication service to a place where installation of a wireless communication base station is not easy.
- Integrated sensing and communication (ISAC): Wireless sensing is a technology enabler to acquire information about characteristics of the environment and/or objects within the environment, that uses radio frequency to determine the distance (range), angle, or instantaneous linear velocity of objects, etc.
- Reconfigurable intelligent surface (RIS): RIS may be used to manipulate and enhance signal propagation in a wireless communication environment. For example, RIS may be composed of meta-surfaces or many small antennas arranged on a surface, and each small antenna may actively adjust a phase, an amplitude, a polarization, etc. of a reflected signal. For example, RIS can improve signal reception by adjusting a path, a phase, and/or an intensity of a propagated signal. For example, in a case of RIS, because power is consumed only for phase and amplitude adjustment of small antennas, power consumption may be very low. For example, because RIS may be reconfigured in accordance with various environments, it can satisfy various communication requirements and can effectively operate in a dynamic network environment.

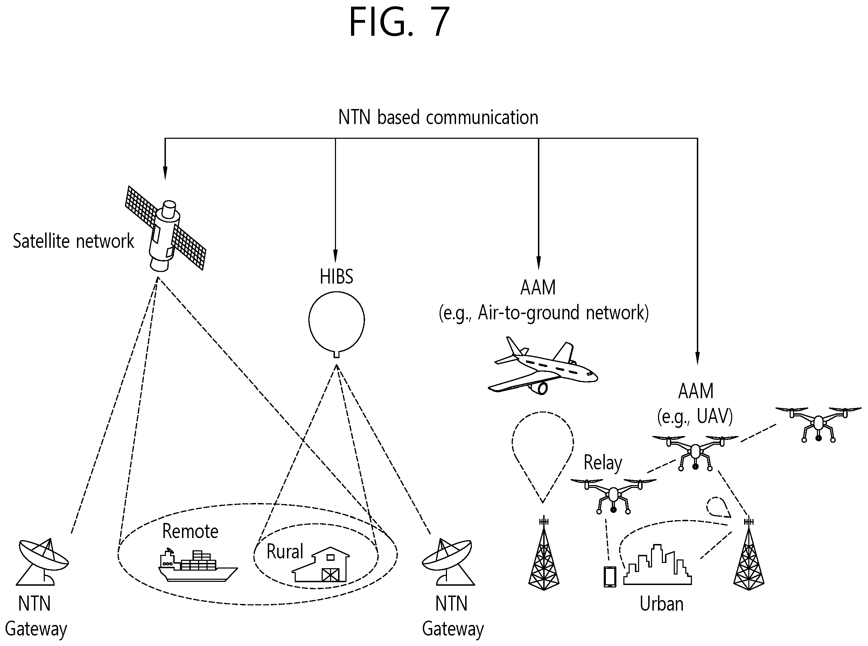

FIG. 7 shows an example of a communication scenario based on a 6G system, based on an embodiment of the present disclosure. The embodiment of FIG. 7 may be combined with various embodiments of the present disclosure.

Referring to FIG. 7, NTN communication may be performed based on a satellite network, high-altitude platform stations (HAPS) as international mobile telecommunications (IMT) base stations (BS) (HIBS), a UE (e.g., AAM) capable of aerial communication, etc. For example, for coverage enhancement, etc., a device such as the satellite network, the HIBS, the UE (e.g., AAM) capable of aerial communication, etc. may perform a role of a relay. For example, the AAM may perform communication with a base station, a satellite network, etc., and/or the AAM may perform direct communication with a UE, another AAM, etc.

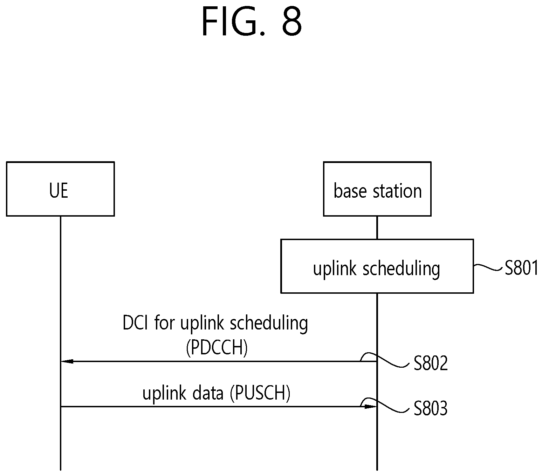

FIG. 8 shows a procedure for uplink transmission and reception, based on an embodiment of the present disclosure. The embodiment of FIG. 8 may be combined with various embodiments of the present disclosure.

Referring to FIG. 8, for example, in step S801, a base station may schedule an uplink transmission, such as a frequency/time resource, a transmission layer, an uplink precoder, an MCS, and the like. For example, the base station may determine a beam for a PUSCH transmission of a UE through the operations described above.

For example, in step S802, the UE may receive, from the base station, DCI for uplink scheduling (e.g., including scheduling information for a PUSCH) on a PDCCH.

For example, DCI format 0_0 or 0_1 may be used for uplink scheduling, and particularly, DCI format 0_1 may include the following information: DCI format identifier (Identifier for DCI formats), UL/SUL (Supplementary uplink) indicator (UL/SUL indicator), bandwidth part indicator (Bandwidth part indicator), frequency domain resource assignment (Frequency domain resource assignment), time domain resource assignment (Time domain resource assignment), frequency hopping flag (Frequency hopping flag), modulation and coding scheme (MCS: Modulation and coding scheme), SRS resource indicator (SRI: SRS resource indicator), precoding information and number of layers (Precoding information and number of layers), antenna port(s) (Antenna port(s)), SRS request (SRS request), DMRS sequence initialization (DMRS sequence initialization), and UL-SCH indicator (UL-SCH indicator).

For example, SRS resources configured within an SRS resource set related to the higher-layer parameter 'usage' may be indicated by an SRS resource indicator field. For example, 'spatialRelationInfo' may be configured for each SRS resource, and the value thereof may be one of {CRI, SSB, SRI}.

For example, in step S803, the UE may transmit uplink data to the base station on a PUSCH.

For example, when the UE detects a PDCCH including DCI format 0_0 or 0_1, the UE may transmit the corresponding PUSCH according to an indication by the corresponding DCI.

For example, two transmission schemes (e.g., a codebook-based transmission for a PUSCH transmission and a non-codebook-based transmission for a PUSCH transmission) may be supported:
i) For example, when the higher-layer parameter 'txConfig' is set to 'codebook', the UE may be configured for a codebook-based transmission. For example, when the higher-layer parameter 'txConfig' is set to 'nonCodebook', the UE may be configured for a non-codebook-based transmission. For example, when the higher-layer parameter 'txConfig' is not configured, the UE may not expect scheduling by DCI format 0_1. For example, when a PUSCH is scheduled by DCI format 0_0, the PUSCH transmission may be based on a single antenna port.
   For example, in the case of a codebook-based transmission, a PUSCH may be scheduled by DCI format 0_0, DCI format 0_1, or semi-static scheduling. For example, when the PUSCH is scheduled by DCI format 0_1, the UE may determine a PUSCH transmission precoder based on an SRI, a TPMI (Transmit Precoding Matrix Indicator), and a transmission rank from the DCI, as given by the SRS resource indicator field and the precoding information and number of layers field. For example, the TPMI may be used to indicate a precoder to be applied across antenna ports, and may correspond to an SRS resource selected by the SRI when multiple SRS resources are configured. For example, when a single SRS resource is configured, the TPMI may be used to indicate a precoder to be applied across antenna ports and may correspond to the single SRS resource. For example, a transmission precoder may be selected from an uplink codebook having the same number of antenna ports as the higher-layer parameter 'nrofSRS-Ports'. For example, when the UE is configured with the higher-layer parameter 'txConfig' set to 'codebook', at least one SRS resource may be configured. For example, an SRI indicated in slot n is related to the most recent transmission of the SRS resource identified by the SRI, wherein the SRS resource may precede the PDCCH carrying the SRI (e.g., in slot n).
ii) For example, in the case of a non-codebook-based transmission, a PUSCH may be scheduled by DCI format 0_0, DCI format 0_1, or semi-static scheduling. For example, when multiple SRS resources are configured, the UE may determine a PUSCH precoder and a transmission rank based on a wideband SRI, wherein the SRI may be given by the SRS resource indicator in DCI or by the higher-layer parameter 'srs-ResourceIndicator'. For example, the UE may use one or multiple SRS resources for SRS transmission, wherein the number of SRS resources may be configured for simultaneous transmission within the same RB based on a UE capability. For example, only one SRS port may be configured for each SRS resource. For example, only one SRS resource may be configured with the higher-layer parameter 'usage' set to 'nonCodebook'. For example, the maximum number of SRS resources that may be configured for a non-codebook-based uplink transmission may be 4. For example, an SRI indicated in slot n is related to the most recent transmission of the SRS resource identified by the SRI, wherein the SRS transmission may precede the PDCCH carrying the SRI (e.g., in slot n).

For example, an orthogonal cover code (OCC) across PUSCH repetition(s) may be disclosed.

For example, in the case of OCC across PUSCH repetition(s), the following two directions may be considered:
- For example, Option 1: OCC with PUSCH repetition Type A
- For example, Option 2: OCC with PUSCH repetition Type B

For example, OCC across PUSCH repetition(s) may be an integrated solution that can be applied to both IoT NTN and NR NTN, and may be a study direction to reduce specification work. However, the feasibility of applying OCC should be studied considering impairments such as time/frequency shift and phase distortion in GSO/NGSO environment.

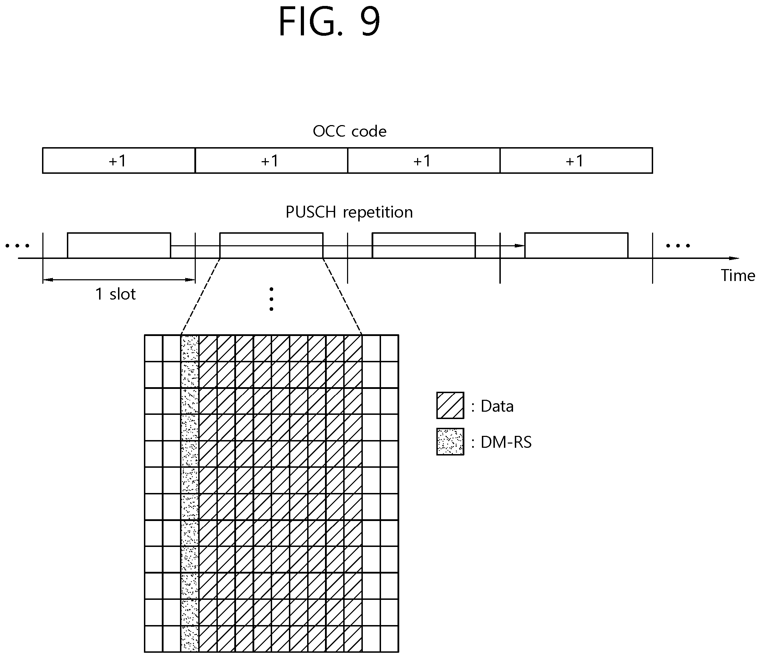

FIG. 9 shows an example of OCC with PUSCH repetition Type A, based on an embodiment of the present disclosure. The embodiment of FIG. 9 may be combined with various embodiments of the present disclosure.

Referring to FIG.9, for example, OCC with PUSCH repetition Type A (Option 1) may be a scheme of applying OCC between PUSCH repetition(s) where PUSCH is repeated on a slot basis. For example, a PUSCH allocated within one slot may be repeatedly transmitted for a plurality of slots, and OCC may be applied across PUSCH repetition(s). For example, in order to apply OCC between slots, the feasibility of maintaining orthogonality of OCC may need to be considered. For example, during the period where OCC is applied, gNB may expect UE to maintain phase continuity and/or power consistency of PUSCH transmission. For example, this may be supported by reusing the capabilities of DM-RS bundling introduced in UL coverage enhancement (e.g., nominal/actual TDW) or defining new UE capabilities. For example, in NR-NTN, UE may be expected to apply pre-compensation for delay/Doppler during uplink transmission, and the pre-compensation process may depend on UE implementation. For example, in order to ensure the orthogonality of OCC, discussion on the pre-compensation requirements for OCC may be necessary. For example, when an NTN UE reports OCC support capability, delay/Doppler pre-compensation capability within a certain level may be required as a prerequisite for the OCC capability.

For example, for OCC with PUSCH repetition Type A (Option 1), OCC orthogonality may not be guaranteed without pre-requisites such as phase continuity, power consistency, delay/Doppler pre-compensation, etc.

For example, for Option 1, some operations of PUSCH repetition Type A may need to be changed. For example, in PUSCH Repetition Type A, when PUSCH is repeated over slots, redundancy version (RV) cycling over PUSCH repetition(s) may be applied. For example, for Option 1, the same signal may need to be repeated for applying OCC, so RV may need to be fixed between repeated transmissions. For example, if the OCC across PUSCH repetition(s) is also applied to the DM-RS sequence within the PUSCH, the DM-RS sequence may need to remain the same between PUSCH repetition(s). For example, according to current specification, PUSCH DM-RS sequence has an initial value which depends on slot index, but when OCC is applied, the initial value for PUSCH DM-RS sequence within repeated transmission may be fixed to the same value.

For example, for OCC with PUSCH repetition Type A (Option 1), changes in RV and/or PUSCH DM-RS sequences through slots may not be suitable for OCC application.

For example, in Rel-17, support of PUSCH repetition Type A for Msg3 PUSCH was also introduced. For example, when discussing the application of OCC to PUSCH Repetition Type A, it may be discussed whether applying OCC for Msg3 PUSCH is in the study scope. For example, in the case of Msg3 PUSCH, uplink capacity/throughput may be reduced up to 1/16 with the maximum repetition number of 16. For example, if OCC is not applied for Msg3 PUSCH case, a significant latency may occur during initial access of NTN UE. For example, for Msg3 PUSCH, OCC resources may be linked to RA preamble resources.

For example, For OCC with PUSCH repetition Type A (Option 1), the enhancement may be also applied to Msg3 PUSCH with repetition(s).

For example, in Rel-19 NR NTN, study OCC with PUSCH repetition Type A considering the following aspects:
- For example, phase continuity and/or power consistency
- For example, Time/Frequency shift pre-compensation
- For example, redundancy version (RV) cycling
- For example, DM-RS sequence initialization
- For example, Msg3 PUSCH enhancement

For example, in the field of communications, introduction of a non-terrestrial network (NTN) utilizing a satellite or the like as a network node has been actively discussed recently. For example, a satellite supporting the NTN may be classified according to an orbit and characteristics of the satellite, such as GEO, MEO, and LEO, and may generally have a characteristic of a very high altitude. For example, a service area of the satellite may have a very wide coverage characteristic, and the number of target UEs within the service area may be relatively large. For example, the NTN service may require support of multiplexing for a plurality of UEs. For example, since a terrestrial UE has a limitation on transmission power, a coverage enhancement technique may be applied in order to allow a signal of a sufficient magnitude to reach a high-altitude NTN during uplink transmission. For example, the UE may achieve coverage enhancement by repeating a physical uplink shared channel (PUSCH), which is an uplink data channel, on a time domain. For example, the UE may transmit the PUSCH using a discrete fourier transform spread orthogonal frequency division multiplexing (DFT-s-OFDM) scheme for a coverage gain. For example, the DFT-s-OFDM modulation scheme may refer to a modulation scheme in which DFT precoding (e.g., or DFT spreading) is applied as part of transform (TF) precoding before an OFDM modulation scheme. For example, the coverage enhancement technique may suffer from reduced resource utilization efficiency due to repeated transmissions, and an uplink multiplexing scheme utilizing an orthogonal cover code (OCC) may be effective. For example, hereinafter, the present disclosure may propose a scheme for achieving capacity enhancement and/or multiplexing of an uplink data channel by utilizing an OCC when performing uplink repeated transmission.

For example, Proposal #01 may be proposed.

For example, according to Proposal #01, when a UE may apply an OCC between repeated transmissions of an uplink data channel (e.g., a PUSCH) on a time domain during transmission of the uplink data channel (e.g., the PUSCH), a scheme in which the UE is expected to apply the OCC within a (pre-)agreed and/or configured/indicated time interval between a base station and/or UEs may be proposed.

For example, the OCC application between repetition(s) of the uplink data channel on a time domain may refer to an operation of applying an OCC on a repetition transmission unit basis (e.g., or a multiple thereof).

For example, whether the OCC is applied may be configured/indicated by the base station.

For example, the time interval may be a time interval during which phase continuity and/or power consistency and/or timing advance and/or a channel and the like are expected to be maintained (within a predetermined error range). For example, the time interval may be related to a time interval during which a bundling operation is possible for a demodulation reference signal (DM-RS).

For example, the UE may report a UE capability related to the time interval. For example, the UE may report, as capability information, a (maximum) time interval during which phase continuity and/or power consistency and the like can be maintained.

For example, in a next-generation mobile communication system according to an embodiment of the present disclosure, it may be assumed that a UE transmits an uplink data channel (e.g., a PUSCH). For example, a scheme may be considered in which the UE repeatedly transmits the uplink data channel on a time domain and applies a (time domain) OCC between the repeated transmissions. For example, the (time domain) OCC may be intended to multiplex one or more uplink data channel (e.g., PUSCH) transmissions (within the same cell). For example, for the (time domain) OCC to be valid, phase continuity and/or power consistency and/or timing advance and/or a channel and the like of a signal transmitted by the UE during a period in which the OCC is applied may need to remain substantially unchanged. For example, the present disclosure may propose a scheme in which, when a UE may apply an OCC between repeated transmissions of an uplink data channel (e.g., a PUSCH) on a time domain during transmission of the uplink data channel (e.g., the PUSCH), the UE is expected to apply the OCC within a (pre-)agreed and/or configured/indicated time interval between a base station and/or UEs. For example, the time interval may be a time interval during which phase continuity and/or power consistency and/or timing advance and/or a channel and the like are expected to be maintained (within a predetermined error range). For example, if application of the OCC beyond the time interval is indicated, the UE may ignore the corresponding OCC application. For example, according to the proposal of the present disclosure, unnecessary complexity may be reduced by allowing the UE to perform OCC application only when valid.

For example, Proposal #01 may be applied in combination with other proposal(s) within a range in which operations of the present disclosure do not conflict.

For example, Proposal #02 may be proposed.

For example, according to Proposal #02, when a UE may apply an OCC between repeated transmissions of an uplink data channel (e.g., a PUSCH) on a time domain during transmission of the uplink data channel (e.g., the PUSCH), a scheme for determining a redundancy version (RV) and/or scrambling for the repeated transmission(s) in one or more of the following manners may be proposed.
(1) For example, the same RV and/or scrambling may be applied to all repeated transmission(s).
(2) For example, the same RV and/or scrambling may be applied within a resource group to which an OCC is applied, and different RVs and/or scrambling may be applied among resource groups to which the OCC is applied.

For example, the OCC application between repetition(s) of the uplink data channel on a time domain may refer to an operation of applying an OCC on a repetition transmission unit basis (e.g., or a multiple thereof).

For example, the resource group to which the OCC is applied may refer to (time domain) resource(s) to which one OCC is applied.

For example, whether the OCC is applied may be configured/indicated by the base station.

For example, in a next-generation mobile communication system according to an embodiment of the present disclosure, it may be assumed that a UE transmits an uplink data channel (e.g., a PUSCH). For example, a scheme may be considered in which the UE repeatedly transmits the uplink data channel on a time domain and applies a (time domain) OCC between the repeated transmissions. For example, the (time domain) OCC may be intended to multiplex one or more uplink data channel (e.g., PUSCH) transmissions (within the same cell). For example, for the (time domain) OCC to be valid, data (e.g., or modulated symbols) of the repeatedly transmitted uplink data channel (e.g., a PUSCH) may need to be identical. For example, even if repeated transmissions of the uplink data channel are transmitted together with an OCC, if a redundancy version (RV) and/or scrambling differs for each repetition, orthogonality by the OCC code may not be guaranteed. For example, the present disclosure may propose a scheme for determining a redundancy version (RV) and/or scrambling for the repeated transmission(s) in one or more of the following manners when a UE may apply an OCC between repeated transmissions of an uplink data channel (e.g., a PUSCH) on a time domain during transmission of the uplink data channel (e.g., the PUSCH).
(1) For example, the same RV and/or scrambling may be applied to all repeated transmission(s).
(2) For example, the same RV and/or scrambling may be applied within a resource group to which an OCC is applied, and different RVs and/or scrambling may be applied among resource groups to which the OCC is applied.

For example, according to the proposal of the present disclosure, when repeatedly transmitting an uplink data channel (e.g., a PUSCH) on a time domain, there may be an advantage that a diversity operation for an RV and/or scrambling can be supported while supporting OCC-based multiplexing.

For example, for RV cycling for OCC with PUSCH, the following are considered:
- For example, Option 1: RV cycling may be used across OCC groups.
   - - For example, Note 1: RV cycling may be applied when the number of repetitions is greater than the OCC length.
- For example, Option 2: Fixed RV may be used across OCC groups.
- For example, Option 3: For OCC length of 2, fixed RV may be used across two OCC groups, RV cycling may be used among groups of two OCC groups.

For example, Proposal #02 may be applied in combination with other proposal(s) within a range in which operations of the present disclosure do not conflict.

For example, Proposal #03 may be proposed.

For example, according to Proposal #03, when a UE may apply an OCC between repeated transmissions of an uplink data channel (e.g., a PUSCH) on a time domain during transmission of the uplink data channel (e.g., the PUSCH), a scheme supporting one or more of the following operations may be proposed when the UE drops transmission for all or part of repeated transmissions of the uplink data channel (e.g., the PUSCH) (due to a specific event).
(1) For example, the OCC may be changed and applied to an OCC corresponding to a reduced number of repetition(s) due to transmission dropping.
(2) For example, all repeated transmission(s) of an uplink data channel (e.g., a PUSCH) grouped with, through an OCC, an uplink data channel (e.g., a PUSCH) for which transmission is to be dropped may be dropped.

For example, the OCC application between repetition(s) of the uplink data channel on a time domain may refer to an operation of applying an OCC on a repetition transmission unit basis (e.g., or a multiple thereof).

For example, whether the OCC is applied may be configured/indicated by the base station.

For example, the transmission dropping may include transmission dropping due to a multiplexing rule between uplink data channel(s) and/or uplink control channel(s), and/or transmission dropping due to an RF constraint of the UE and/or a transmission power constraint.

For example, in a next-generation mobile communication system according to an embodiment of the present disclosure, it may be assumed that a UE transmits an uplink data channel (e.g., a PUSCH). For example, a scheme may be considered in which the UE repeatedly transmits the uplink data channel on a time domain and applies a (time domain) OCC between the repeated transmissions. For example, the (time domain) OCC may be intended to multiplex one or more uplink data channel (e.g., PUSCH) transmissions (within the same cell). For example, the UE may drop transmission for a specific uplink data channel due to transmission dropping caused by a multiplexing rule between uplink data channel(s) and/or uplink control channel(s), and/or an RF constraint of the UE and/or a transmission power constraint. For example, when the UE repeatedly transmits the uplink data channel, all or part of the repeated transmissions may be dropped. For example, it may be assumed that the UE repeatedly transmits the uplink data channel and applies an OCC between the repeated transmissions. For example, if only part of a repetition transmission group to which the OCC is applied is dropped, the existing OCC may be distorted and orthogonality may no longer be maintained, and thus transmissions that are not dropped among the repetition transmission group may act as interference to an uplink data channel transmission of another UE. For example, the present disclosure may propose a scheme supporting one or more of the following operations when the UE drops transmission for all or part of repeated transmissions of the uplink data channel (e.g., a PUSCH) (due to a specific event), while the UE may apply an OCC between repeated transmissions of the uplink data channel (e.g., the PUSCH) on a time domain during transmission of the uplink data channel (e.g., the PUSCH).
(1) For example, the OCC may be changed and applied to an OCC corresponding to reduced repetition(s) due to transmission dropping.
(2) For example, all repeated transmission(s) of an uplink data channel (e.g., a PUSCH) grouped with, through an OCC, an uplink data channel (e.g., a PUSCH) for which transmission is to be dropped may be dropped.

For example, according to the proposal of the present disclosure, there may be an advantage that transmission dropping considering an interference impact on an uplink data channel of a multiplexed UE can be supported when transmission dropping occurs for all or part of repeated transmissions of the uplink data channel.

For example, Proposal #03 may be applied in combination with other proposal(s) within a range in which operations of the present disclosure do not conflict.

Since a beam radius is wider in an NTN than in a TN, there may be many UEs within a beam, and thus uplink capacity may be insufficient. Since a beam radius is wider in an NTN than in a TN, there may be many UEs within a beam, and thus uplink resources may be insufficient.

For example, Proposal #04 may be proposed.

For example, according to Proposal #04, when a UE may apply an OCC between repeated transmissions of an uplink data channel (e.g., a PUSCH) on a time domain during transmission of the uplink data channel (e.g., the PUSCH), if an uplink control channel (e.g., a PUCCH) transmission occurs at a transmission time of an uplink data channel (e.g., a PUSCH) to which the OCC is applied, a scheme supporting multiplexing by the UE in one or more of the following manners may be proposed.
(1) For example, OCC application may be disabled, and an uplink multiplexing rule when the OCC is not applied may be applied.
(2) For example, after application of an uplink multiplexing rule when the OCC is not applied, when an uplink data channel (e.g., a PUSCH) including UCI occurs, the UCI may be repeatedly transmitted in all repeated transmission(s) of an uplink data channel grouped with the corresponding uplink data channel through the same OCC.

For example, the OCC application between repetition(s) of the uplink data channel on a time domain may refer to an operation of applying an OCC on a repetition transmission unit basis (e.g., or a multiple thereof).

For example, the OCC application between repetition(s) of the uplink data channel on a time domain may refer to an operation of applying an OCC on a repetition transmission unit basis (e.g., or a multiple thereof).

For example, whether the OCC is applied may be configured/indicated by the base station.

For example, in a next-generation mobile communication system according to an embodiment of the present disclosure, it may be assumed that a UE transmits an uplink data channel (e.g., a PUSCH). For example, a scheme may be considered in which the UE repeatedly transmits the uplink data channel on a time domain and applies a (time domain) OCC between the repeated transmissions. For example, the (time domain) OCC may be intended to multiplex one or more uplink data channel (e.g., PUSCH) transmissions (within the same cell). For example, when an OCC is applied between repeated transmissions of the uplink data channel, an uplink multiplexing rule may need to be considered. For example, it may be assumed that an uplink data channel (e.g., a PUSCH) is repeatedly transmitted and that an OCC is applied between the repeated transmissions. For example, assuming a case in which the OCC is not applied, it may be assumed that a multiplexing rule is applied such that uplink control information (UCI) is included in some repeated transmissions of the uplink data channel. For example, if UCI is transmitted only in some repeated transmissions of the uplink data channel, the number of data symbols among all repeated transmissions to which the OCC is applied may not be identical due to a rate-matching process resulting from inclusion of the UCI, and therefore data to which a complete OCC is not applied may occur. For example, application of an incomplete OCC may cause interference to an uplink transmission using another OCC. For example, the present disclosure may propose a scheme supporting multiplexing by the UE in one or more of the following manners when an uplink control channel (e.g., a PUCCH) transmission occurs at a transmission time of an uplink data channel (e.g., a PUSCH) to which an OCC is applied, while the UE may apply an OCC between repeated transmissions of the uplink data channel (e.g., the PUSCH) on a time domain during transmission of the uplink data channel (e.g., the PUSCH).
(1) For example, OCC application may be disabled, and an uplink multiplexing rule when the OCC is not applied may be applied.
(2) For example, after application of an uplink multiplexing rule when the OCC is not applied, when an uplink data channel (e.g., a PUSCH) including UCI occurs, the UCI may be repeatedly transmitted in all repeated transmission(s) of an uplink data channel grouped with the corresponding uplink data channel through the same OCC.

For example, according to the proposal of the present disclosure, there may be an advantage that OCC application considering an uplink multiplexing rule can be supported in a situation in which UCI is included in an uplink data channel.

For example, if PUCCH without repetition overlaps with an inter-slot OCC with any PUSCH repetitions in an OCC group, the following options may be considered:
- For example, Option 1: UCI may be dropped.
   - - For example, FFS: Whether all UCI is dropped.
- For example, Option 2: UCI may be transmitted on PUCCH, and all PUSCH repetitions within the OCC group may be dropped.
- For example, Option 3: UCI may be multiplexed on PUSCH with inter-slot OCC.

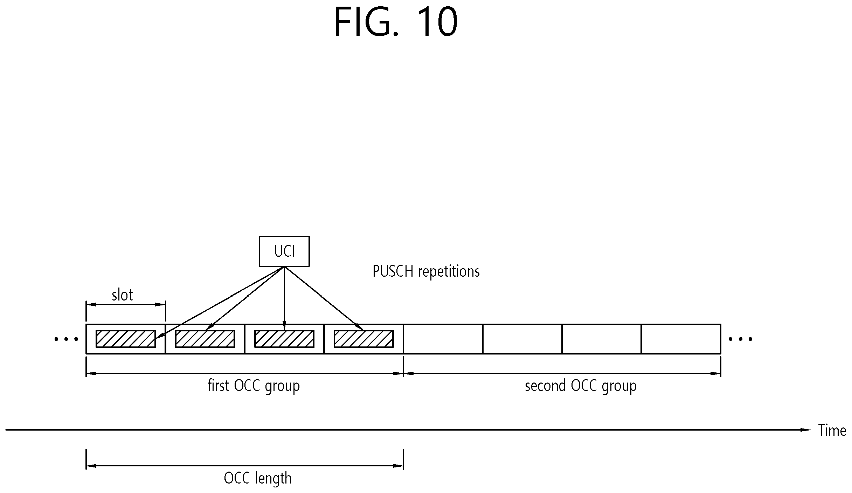

FIG. 10 shows an example of multiplexing for UCI, based on an embodiment of the present disclosure. The embodiment of FIG. 10 may be combined with various embodiments of the present disclosure.

Referring to FIG. 10, for example, PUSCH repetitions may be performed. For example, an OCC length may be 4. For example, there may be a first OCC group and a second OCC group. UCI may be multiplexed.
- - For example, Option 3-a: UCI may be multiplexed on all PUSCH repetitions within an OCC group with inter-slot OCC. For example, UCI may be multiplexed on all PUSCH repetitions within the first OCC group.
- - - For example, FFS: Which OCC group.

For example, unlike shown in FIG. 10, the OCC length may not be limited to 4. For example, unlike shown in FIG. 10, the number of OCC groups may not be limited to 2.

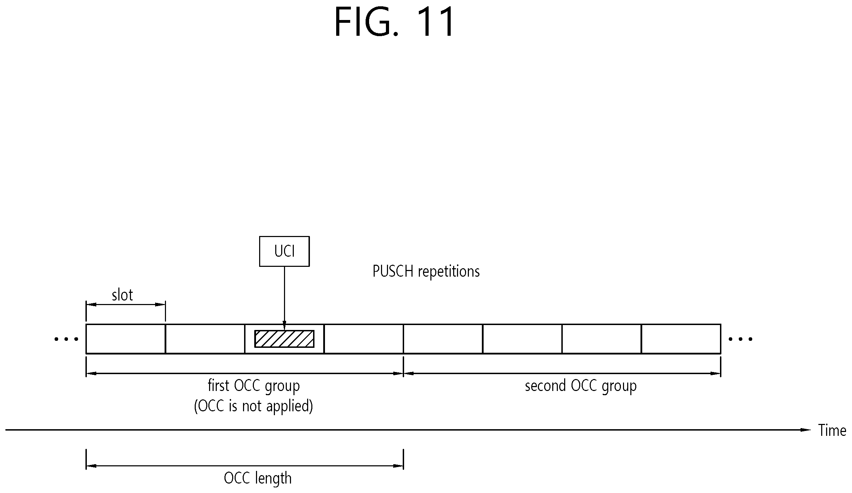

FIG. 11 shows an example of multiplexing for UCI, based on an embodiment of the present disclosure. The embodiment of FIG. 11 may be combined with various embodiments of the present disclosure.

Referring to FIG. 11, for example, PUSCH repetitions may be performed. For example, an OCC length may be 4. For example, there may be a first OCC group and a second OCC group. UCI may be multiplexed.
- - For example, Option 3-b: UCI may be multiplexed on PUSCH, and OCC may not be applied within the OCC group. For example, UCI may be multiplexed on PUSCH, and OCC may not be applied within the first OCC group.

For example, unlike shown in FIG. 11, the OCC length may not be limited to 4. For example, unlike shown in FIG. 11, the number of OCC groups may not be limited to 2.

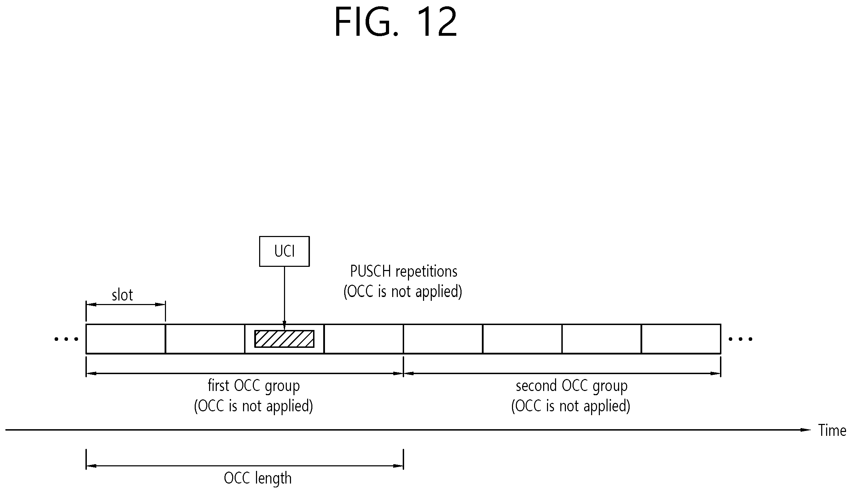

FIG. 12 shows an example of multiplexing for UCI, based on an embodiment of the present disclosure. The embodiment of FIG. 12 may be combined with various embodiments of the present disclosure.

Referring to FIG. 12, for example, PUSCH repetitions may be performed. For example, an OCC length may be 4. For example, there may be a first OCC group and a second OCC group. UCI may be multiplexed.
- - For example, Option 3-c: UCI may be multiplexed on PUSCH, and OCC may not be applied within the PUSCH repetitions. For example, UCI may be multiplexed on PUSCH, and OCC may not be applied within all PUSCH repetitions. For example, UCI may be multiplexed on PUSCH, and OCC may not be applied within the first OCC group and the second OCC group.

For example, unlike shown in FIG. 12, the OCC length may not be limited to 4. For example, unlike shown in FIG. 12, the number of OCC groups may not be limited to 2.
For example, Note: combination of the above can be considered
For example, FFS: Details timeline of PUCCH and PUSCH may be described
For example, FFS: handling of PUCCH with repetition
For example, FFS: handling of different UCI types

When an orthogonal cover code is applied between uplink shared channel repetition(s) where an uplink shared channel is repeated on a slot basis, if any uplink shared channel repetition in an orthogonal cover code group overlaps with an uplink control channel, uplink capacity may be improved by multiplexing uplink control information on an uplink shared channel to which the orthogonal cover code is applied. When an orthogonal cover code is applied between uplink shared channel repetition(s) where an uplink shared channel is repeated on a slot basis, if any uplink shared channel repetition in an orthogonal cover code group overlaps with an uplink control channel, a shortage of uplink resources may be reduced by multiplexing uplink control information on the uplink shared channel.

Proposal #04 may be applied in combination with other proposal(s) within a range in which operations of the present disclosure do not conflict.

For example, Proposal #05 may be proposed.

For example, according to Proposal #05, when a UE may apply an OCC between repeated transmissions of an uplink data channel (e.g., a PUSCH) on a time domain during transmission of the uplink data channel (e.g., the PUSCH), a scheme may be proposed in which a base station and/or a UE configures/determines an OCC application unit differently according to a repetition type of the uplink data channel.
(1) For example, when the repeated transmission is a slot-based repeated transmission (e.g., PUSCH repetition type A), the OCC application unit may be configured/determined as a multiple of the number of slots transmitting a (single) TB.
(2) For example, when the repeated transmission is a symbol-group-based repeated transmission (e.g., PUSCH repetition type B), the OCC application unit may be configured/determined as a multiple of the number of symbols transmitting a (single) TB.

For example, the OCC application between repetition(s) of the uplink data channel on a time domain may refer to an operation of applying an OCC on a repetition transmission unit basis.

For example, whether the OCC is applied may be configured/indicated by the base station.

For example, in a next-generation mobile communication system according to an embodiment of the present disclosure, it may be assumed that a UE transmits an uplink data channel (e.g., a PUSCH). For example, a scheme may be considered in which the UE repeatedly transmits the uplink data channel on a time domain and applies a (time domain) OCC between the repeated transmissions. For example, the (time domain) OCC may be intended to multiplex one or more uplink data channel (e.g., PUSCH) transmissions (within the same cell). For example, the UE may support repeated transmission according to one or more types when repeatedly transmitting the uplink data channel. For example, the UE may repeatedly transmit the uplink data channel on a slot basis (PUSCH Repetition Type A) or on a symbol group (or sub-slot) basis (PUSCH Repetition Type B). For example, when the UE may apply an OCC between repeated transmissions of an uplink data channel (e.g., a PUSCH) on a time domain during transmission of the uplink data channel (e.g., the PUSCH), the base station and/or the UE may configure/determine an OCC application unit differently according to a repetition type of the uplink data channel. For example, when performing slot-based repeated transmission, the base station and/or the UE may configure/determine the OCC application unit as a multiple of the number of slots transmitting a (single) TB, and when performing symbol-group-based repeated transmission, may configure/determine the OCC application unit as a multiple of the number of symbols transmitting a (single) TB. For example, according to the proposal of the present disclosure, the base station and/or the UE may configure/determine an appropriate OCC application unit according to a repetition type of the uplink data channel of the UE.

For example, Proposal #05 may be applied in combination with other proposal(s) within a range in which operations of the present disclosure do not conflict.

For example, Proposal #06 may be proposed.

For example, according to Proposal #06, when a UE may apply an OCC between repeated transmissions of an uplink data channel (e.g., a PUSCH) on a time domain during transmission of the uplink data channel (e.g., the PUSCH), a scheme may be proposed in which both an OCC applied within a slot (a first-type OCC) and an OCC applied between slots (a second-type OCC) are applied.

For example, the OCC application between repetition(s) of the uplink data channel on a time domain may refer to an operation of applying an OCC on a repetition transmission unit basis (e.g., or a multiple thereof).

For example, whether the OCC is applied may be configured/indicated by the base station.

For example, in a next-generation mobile communication system according to an embodiment of the present disclosure, it may be assumed that a UE transmits an uplink data channel (e.g., a PUSCH). For example, a scheme may be considered in which the UE repeatedly transmits the uplink data channel on a time domain and applies a (time domain) OCC between the repeated transmissions. For example, the (time domain) OCC may be intended to multiplex one or more uplink data channel (e.g., PUSCH) transmissions (within the same cell). For example, the UE may support repeated transmission according to one or more types when repeatedly transmitting the uplink data channel. For example, the UE may repeatedly transmit the uplink data channel on a slot basis (PUSCH repetition type A) or on a symbol group (or sub-slot) basis (PUSCH repetition type B). For example, support of an OCC between repeated transmissions of uplink data channels having different types may need to be considered. For example, an OCC application scheme guaranteeing orthogonality between slot-based repeated transmission and symbol-group-based repeated transmission may be considered. For example, it may be assumed that a first UE performs slot-based repeated transmission four times over four slots, a second UE performs symbol-group-based repeated transmission eight times over four slots (with a symbol group having a half-slot length), and a third UE performs symbol-group-based repeated transmission twice in a first slot among the four slots (with a symbol group having a half-slot length). For example, in order to guarantee orthogonality among repeated transmissions of the UEs, both an OCC applied within a slot and an OCC applied between slots may be applied. For example, in the above example, the base station and/or the UE may configure/indicate the UE to transmit by applying a length-2 OCC on a symbol-group basis (with a symbol group having a half-slot length) within a slot during transmission of the uplink data channel (e.g., a PUSCH), and by applying a length-4 OCC corresponding to the entire length of four slots between slots. For example, according to the proposal of the present disclosure, there may be an advantage that OCC-based orthogonality can be supported even when a unit and/or type of repeated transmission of an uplink data channel (e.g., a PUSCH) is different.

For example, Proposal #06 may be applied in combination with other proposal(s) within a range in which operations of the present disclosure do not conflict.

For example, Proposal #07 may be proposed.

For example, according to Proposal #07, when a UE may apply an OCC between repeated transmissions of an uplink data channel (e.g., a PUSCH) on a time domain during transmission of the uplink data channel (e.g., the PUSCH), a scheme may be proposed in which an OCC and/or a CS applied to an RS within the uplink data channel is determined based on the first OCC (hereinafter, the first OCC), which may be applied between repeated transmissions of the uplink data channel.

For example, the OCC application between repetition(s) of the uplink data channel on a time domain may refer to an operation of applying an OCC on a repetition transmission unit basis (e.g., or a multiple thereof).

For example, whether the OCC is applied may be configured/indicated by the base station.

For example, the reference signal (RS) may refer to a demodulation reference signal (DM-RS) and/or a phase tracking reference signal (PT-RS).

For example, in a next-generation mobile communication system according to an embodiment of the present disclosure, it may be assumed that a UE transmits an uplink data channel (e.g., a PUSCH). For example, a scheme may be considered in which the UE repeatedly transmits the uplink data channel on a time domain and applies a (time domain) OCC between the repeated transmissions. For example, the (time domain) OCC may be intended to multiplex one or more uplink data channel (e.g., PUSCH) transmissions (within the same cell). For example, the UE may determine an OCC and/or a cyclic shift (CS) for a reference signal (RS) based on an OCC value applied between repeated transmissions of the uplink data channel (e.g., a PUSCH). For example, when an OCC is not applied to the uplink data channel, an OCC of a phase tracking reference signal (PT-RS) may be determined based on an RNTI value, whereas when an OCC is applied to the uplink data channel, it may be desirable to determine an OCC value for the PT-RS in association with the OCC value applied to the data channel.

For example, Proposal #07 may be applied in combination with other proposal(s) within a range in which operations of the present disclosure do not conflict.

For example, Proposal #08 may be proposed.

For example, according to Proposal #08, when a UE may apply an OCC between repeated transmissions of an uplink data channel (e.g., a PUSCH) on a time domain during transmission of the uplink data channel (e.g., the PUSCH), an OCC indexing scheme may be proposed such that a second-length OCC in which a first-length OCC is repeated has the same index as the corresponding first-length OCC.

For example, the OCC application between repetition(s) of the uplink data channel on a time domain may refer to an operation of applying an OCC on a repetition transmission unit basis (e.g., or a multiple thereof).

For example, whether the OCC is applied may be configured/indicated by the base station.

For example, the reference signal (RS) may refer to a demodulation reference signal (DM-RS) and/or a phase tracking reference signal (PT-RS).

For example, in a next-generation mobile communication system according to an embodiment of the present disclosure, it may be assumed that a UE transmits an uplink data channel (e.g., a PUSCH). For example, a scheme may be considered in which the UE repeatedly transmits the uplink data channel on a time domain and applies a (time domain) OCC between the repeated transmissions. For example, the (time domain) OCC may be intended to multiplex one or more uplink data channel (e.g., PUSCH) transmissions (within the same cell). For example, it may be assumed that the OCC supports a first-length OCC and a second-length OCC (which is a multiple of the first length). For example, when applying an OCC between repeated transmissions of an uplink data channel (e.g., a PUSCH), the base station and/or the UE may, depending on circumstances, apply the second-length OCC or repeatedly apply the first-length OCC. For example, it may be assumed that the first length is two slots and the second length is four slots. For example, when multiplexing a first PUSCH having a length of four slots and a second PUSCH having a length of four slots, the base station may apply the second-length OCC to the first PUSCH. For example, when multiplexing a first PUSCH having a length of four slots and a second PUSCH and a third PUSCH each having a length of two slots, the base station may desire to repeatedly apply the first-length OCC to the first PUSCH. For example, the present disclosure may propose an OCC indexing scheme such that a second-length OCC in which a first-length OCC is repeated has the same index as the corresponding first-length OCC when a UE may apply an OCC between repeated transmissions of an uplink data channel (e.g., a PUSCH) on a time domain during transmission of the uplink data channel (e.g., the PUSCH). For example, according to the proposal of the present disclosure, there may be an advantage that implementation of the base station and/or the UE is facilitated because repeated application of the first-length OCC is represented as a second-length OCC having the same index.

For example, Proposal #08 may be applied in combination with other proposal(s) within a range in which operations of the present disclosure do not conflict.

For example, Proposal #09 may be proposed.

For example, according to Proposal #09, when a UE may apply an OCC between repeated transmissions of an uplink data channel (e.g., a PUSCH) on a time domain during transmission of the uplink data channel (e.g., the PUSCH), a scheme may be proposed in which the UE applies the (time domain) OCC in one or more of the following manners.
(1) For example, a scheme may be proposed in which the UE applies the (time domain) OCC based on a (time domain) resource grid.
(2) For example, a scheme may be proposed in which the UE applies the (time domain) OCC based on a transmission start point of an uplink data channel (e.g., a PUSCH).

For example, the OCC application between repetition(s) of the uplink data channel on a time domain may refer to an operation of applying an OCC on a repetition transmission unit basis.

For example, whether the OCC is applied may be configured/indicated by the base station.

For example, the base station may configure/indicate which one of the scheme(s) is to be applied.

For example, the (time domain) resource grid may be (pre-)agreed between the base station and the UE, or may be (pre-)configured and/or indicated by the base station. For example, one or more (time domain) resource grids may exist. For example, the (time domain) resource grid may be configured for each OCC length.

For example, in a next-generation mobile communication system according to an embodiment of the present disclosure, it may be assumed that a UE transmits an uplink data channel (e.g., a PUSCH). For example, a scheme may be considered in which the UE repeatedly transmits the uplink data channel on a time domain and applies a (time domain) OCC between the repeated transmissions. For example, the (time domain) OCC may be intended to multiplex one or more uplink data channel (e.g., PUSCH) transmissions (within the same cell). For example, the UE may simply apply the (time domain) OCC based on a transmission start point of the uplink data channel (e.g., a PUSCH). For example, if the OCC supports a hierarchical structure such as a Walsh-Hadamard code, multiplexing among OCCs having different lengths may also be considered. For example, a PUSCH repetition transmission repeated over four slots with a length-4 OCC applied thereto and a PUSCH repetition transmission repeated over two slots with a length-2 OCC applied thereto may be distinguished from each other. For example, in order to satisfy orthogonality among OCCs having different lengths, times at which the OCCs are applied may need to be aligned according to a specific condition. For example, in the example of the length-4 OCC and the length-2 OCC, the length-2 OCC may be orthogonal to a code composed of a first value and a second value of the length-4 OCC, or a code composed of a third value and a fourth value of the length-4 OCC. For example, the present disclosure may propose a scheme in which the UE applies the (time domain) OCC in one or more of the following manners when the UE may apply the OCC between repeated transmissions of the uplink data channel (e.g., a PUSCH) on a time domain during transmission of the uplink data channel (e.g., the PUSCH).
(1) For example, a scheme may be proposed in which the UE applies the (time domain) OCC based on a (time domain) resource grid.
(2) For example, a scheme may be proposed in which the UE applies the (time domain) OCC based on a transmission start point of an uplink data channel (e.g., a PUSCH).

For example, according to the proposal of the present disclosure, there may be an advantage that orthogonality among OCCs between repeated transmissions of uplink data channels having different start points and/or lengths can be supported.

For example, Proposal #09 may be applied in combination with other proposal(s) within a range in which operations of the present disclosure do not conflict.

For example, Proposal #10 may be proposed.

For example, according to Proposal #10, when a UE may apply an OCC between repeated transmissions of an uplink data channel (e.g., a PUSCH) on a time domain during transmission of the uplink data channel (e.g., the PUSCH), a scheme may be proposed in which, when indicating an OCC type and/or an OCC identifier (e.g., an OCC index) and/or an OCC length and the like for the OCC, some or all of bit fields for indicating a redundancy version (RV) for the repeated transmission of the uplink data channel are borrowed and used for the indication.

For example, the OCC application between repetition(s) of the uplink data channel on a time domain may refer to an operation of applying an OCC on a repetition transmission unit basis.

For example, whether the OCC is applied may be configured/indicated by the base station.

For example, in a next-generation mobile communication system according to an embodiment of the present disclosure, it may be assumed that a UE transmits an uplink data channel (e.g., a PUSCH). For example, a scheme may be considered in which the UE repeatedly transmits the uplink data channel on a time domain and applies a (time domain) OCC between the repeated transmissions. For example, the (time domain) OCC may be intended to multiplex one or more uplink data channel (e.g., PUSCH) transmissions (within the same cell). For example, for the (time domain) OCC to be valid, data (e.g., or modulated symbols) of the repeatedly transmitted uplink data channel (e.g., a PUSCH) may need to be identical. For example, even if repeated transmissions of the uplink data channel are transmitted together with an OCC, if a redundancy version (RV) and/or scrambling differs for each repetition, orthogonality by the OCC code may not be guaranteed. For example, when an OCC is applied to repeated transmissions of the uplink data channel, an RV value may be fixed or indicated in a simpler form. For example, the simplified RV may be indicated using only some bits of an existing bit field for an RV in dynamic control information such as dynamic control information (DCI), or no bit field may be required at all. For example, the present disclosure may propose a scheme in which, when a UE may apply an OCC between repeated transmissions of an uplink data channel (e.g., a PUSCH) on a time domain during transmission of the uplink data channel (e.g., the PUSCH), some or all bits of a bit field for an RV used when the OCC is not applied are utilized to indicate an OCC type and/or an OCC identifier and/or an OCC length and the like when the OCC is applied. For example, according to the proposal of the present disclosure, when an OCC is applied to repeated uplink transmissions, there may be an advantage that OCC information can be indicated by (re)using an RV bit field that naturally loses usefulness, without unnecessarily increasing a size of (dynamic) control information for uplink transmission.

For example, Proposal #10 may be applied in combination with other proposal(s) within a range in which operations of the present disclosure do not conflict.

For example, Proposal #11 may be proposed.

For example, according to Proposal #11, when a UE may apply an OCC between repeated transmissions of an uplink data channel (e.g., a PUSCH) on a time domain during transmission of the uplink data channel (e.g., the PUSCH), a scheme may be proposed in which an OCC type and/or an OCC identifier (e.g., an OCC index) and/or an OCC application unit for the OCC is configured/indicated by a base station, and an OCC length is determined by the UE according to a length/number of repetition(s) of the repeated transmission.

For example, if an OCC corresponding to the length/number of repetition(s) of the repeated transmission is not configured/indicated, the UE may perform one or more of the following exception handling operations.
(1) For example, an OCC may not be applied to the repeated transmission.
(2) For example, after selecting an OCC length that is greater than or equal to the repeated transmission, only a part of the OCC may be applied to the repeated transmission.
(3) For example, after selecting an OCC length that is less than or equal to the repeated transmission, only a part of the OCC may be applied or repeatedly applied to the repeated transmission.

For example, the OCC application between repetition(s) of the uplink data channel on a time domain may refer to an operation of applying an OCC on a repetition transmission unit basis.

For example, whether the OCC is applied may be configured/indicated by the base station.

For example, in a next-generation mobile communication system according to an embodiment of the present disclosure, it may be assumed that a UE transmits an uplink data channel (e.g., a PUSCH). For example, a scheme may be considered in which the UE repeatedly transmits the uplink data channel on a time domain and applies a (time domain) OCC between the repeated transmissions. For example, the (time domain) OCC may be intended to multiplex one or more uplink data channel (e.g., PUSCH) transmissions (within the same cell). For example, when an OCC is applied between the repeated transmissions, an OCC length may be related to a length/number of repetition(s) of the repeated transmission. For example, the present disclosure may propose a scheme in which, when a UE may apply an OCC between repeated transmissions of an uplink data channel (e.g., a PUSCH) on a time domain during transmission of the uplink data channel (e.g., the PUSCH), an OCC type and/or an OCC identifier (e.g., an OCC Index) and/or an OCC application unit for the OCC is configured/indicated by a base station, and an OCC length is determined by the UE according to a length/number of repetition(s) of the repeated transmission. For example, according to the proposal of the present disclosure, there may be an advantage that signaling overhead for configuration/indication of an OCC length by the base station can be reduced. For example, if an OCC corresponding to the length/number of repetition(s) of the repeated transmission is not configured/indicated, the UE may perform one or more of the following exception handling operations.
(1) For example, an OCC may not be applied to the repeated transmission.
(2) For example, after selecting an OCC length that is greater than or equal to the repeated transmission, only a part of the OCC may be applied to the repeated transmission.
(3) For example, after selecting an OCC length that is less than or equal to the repeated transmission, only a part of the OCC may be applied or repeatedly applied to the repeated transmission.

For example, when an OCC length that is less than or equal to the repeated transmission is selected and applied, there may be an advantage that OCC-based multiplexing with another uplink data channel having a smaller repetition length/number can be supported. For example, it may be assumed that a length-2 OCC and a length-4 OCC are configured/indicated, and that a UE is indicated to perform three repeated transmissions of an uplink data channel (e.g., a PUSCH). For example, according to the proposal of the present disclosure, the UE (a first UE) may apply the length-2 OCC (a first OCC) to the first two repeated transmissions, and in a section to which the first OCC is applied, another UE (a second UE) may transmit by applying a length-2 OCC (a second OCC) orthogonal to the first OCC to an uplink data channel repeatedly transmitted twice.

For example, Proposal #11 may be applied in combination with other proposal(s) within a range in which operations of the present disclosure do not conflict.

For example, Proposal #12 may be proposed.

For example, according to Proposal #12, when a UE may apply an OCC between repeated transmissions of an uplink data channel (e.g., a PUSCH) on a time domain during transmission of the uplink data channel (e.g., the PUSCH), if an uplink control channel (e.g., a PUCCH) transmission occurs at a transmission time of an uplink data channel (e.g., a PUSCH) to which the OCC is applied, a scheme supporting multiplexing in one or more of the following manners may be proposed.
(1) For example, a scheme may be proposed in which a UE first performs a UL multiplexing rule when the OCC is not applied and then performs an additional exception handling procedure when the OCC is applied. For example, after first performing the UL multiplexing rule when the OCC is not applied, if UCI is included in a (specific) repeated transmission of an uplink data channel, the UE may (re)check whether a processing time for UCI piggybacking is sufficient based on a first transmission time within a resource group to which the same OCC is applied as the corresponding repeated transmission, and if the processing time is sufficient, the UE may repeatedly transmit the UCI within the resource group to which the OCC is applied; otherwise, the UE may drop the corresponding uplink data transmission.
(2) For example, a scheme may be proposed in which a UE defines a UL multiplexing rule when the OCC is applied separately from a case in which the OCC is not applied. For example, a UL multiplexing rule considering a processing time based on a first uplink data channel of a resource group to which the OCC is applied may be defined when the OCC is applied.

For example, the UL multiplexing rule may refer to an operation performed by a UE when transmission interval(s) of a plurality of different uplink transmission channel(s) (from the same UE) overlap (on a time domain).

For example, the OCC application between repetition(s) of the uplink data channel on a time domain may refer to an operation of applying an OCC on a repetition transmission unit basis.

For example, whether the OCC is applied may be configured/indicated by a base station.

For example, in a next-generation mobile communication system according to an embodiment of the present disclosure, it may be assumed that a UE transmits an uplink data channel (e.g., a PUSCH). For example, a scheme may be considered in which the UE repeatedly transmits the uplink data channel on a time domain and applies a (time domain) OCC between the repeated transmissions. For example, the (time domain) OCC may be intended to multiplex one or more uplink data channel (e.g., PUSCH) transmissions (within the same cell). For example, when an OCC is applied between repeated transmissions of the uplink data channel, two approaches for a UL multiplexing rule may be considered. For example, the UL multiplexing rule may include a UE operation when transmissions between uplink data channel(s) (e.g., PUSCH) and uplink control channel(s) (e.g., PUCCH) overlap (on a time domain). For example, an approach may be considered in which a UE first performs the UL multiplexing rule when the OCC is not applied and then performs an additional exception handling procedure when the OCC is applied. For example, after first performing the UL multiplexing rule when the OCC is not applied, if UCI is included in a (specific) repeated transmission of an uplink data channel, the UE may (re)check whether a processing time for UCI piggybacking is sufficient based on a first transmission time within a resource group to which the same OCC is applied as the corresponding repeated transmission, and if the processing time is sufficient, the UE may repeatedly transmit the UCI within the resource group to which the OCC is applied; otherwise, the UE may drop the corresponding uplink data transmission. For example, an approach may be considered in which a UE defines the UL multiplexing rule when the OCC is applied separately from a case in which the OCC is not applied. For example, a UL multiplexing rule considering a processing time based on a first uplink data channel of a resource group to which the OCC is applied may be defined when the OCC is applied. For example, according to the proposal of the present disclosure, there may be an advantage that a UL multiplexing rule can be supported when a UE may apply an OCC between repeated transmissions of an uplink data channel (e.g., a PUSCH) on a time domain during transmission of the uplink data channel (e.g., the PUSCH).

For example, Proposal #12 may be applied in combination with other proposal(s) within a range in which operations of the present disclosure do not conflict.

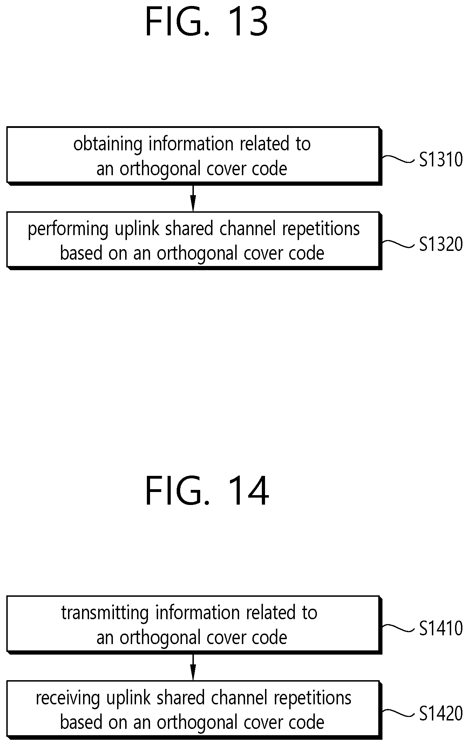

FIG. 13 shows a method for a device to perform wireless communication, based on an embodiment of the present disclosure. The embodiment of FIG. 13 may be combined with various embodiments of the present disclosure.

Referring to FIG. 13, in step S1310, the device may obtain information related to an orthogonal cover code. In step S1320, the device may perform uplink shared channel repetition(s) based on the orthogonal cover code. For example, the orthogonal cover code may be applied between the uplink shared channel repetition(s). For example, based on overlapping between at least one of the uplink shared channel repetition(s) and an uplink control channel, uplink control information related to the uplink control channel may be multiplexed on an uplink shared channel.

For example, based on the overlapping between the at least one of the uplink shared channel repetition(s) and the uplink control channel, the uplink control information may be multiplexed on uplink shared channel repetition(s) within an orthogonal cover code group including the uplink shared channel.

For example, the uplink shared channel repetition(s) within the orthogonal cover code group may be all uplink shared channel repetition(s) within the orthogonal cover code group.

For example, based on the overlapping between the at least one of the uplink shared channel repetition(s) and the uplink control channel, the uplink control information may be multiplexed on the uplink shared channel, and the orthogonal cover code may not be applied within an orthogonal cover code group including the uplink shared channel.

For example, based on the overlapping between the at least one of the uplink shared channel repetition(s) and the uplink control channel, the uplink control information may be multiplexed on the uplink shared channel, and the orthogonal cover code may not be applied within the uplink shared channel repetition(s).

For example, the orthogonal cover code may be an inter-slot orthogonal cover code.

For example, the inter-slot orthogonal cover code may be an orthogonal cover code applied between the uplink shared channel repetition(s) where the uplink shared channel is repeated on a slot basis.

For example, based on the overlapping between the at least one of the uplink shared channel repetition(s) and an uplink control channel, and based on processing time for piggybacking of the uplink control information remaining, the uplink control information may be multiplexed on the uplink shared channel. For example, the processing time for piggybacking of the uplink control information may be based on the first uplink shared channel repetition within an orthogonal cover code group including the at least one of the uplink shared channel repetition(s).

For example, based on the overlapping between the at least one of the uplink shared channel repetition(s) and an uplink control channel, and based on no processing time for piggybacking of the uplink control information remaining, the uplink control information may be transmitted on the uplink control channel, and uplink shared channel repetition(s) within an orthogonal cover code group including the uplink shared channel are dropped. For example, the uplink shared channel repetition(s) within the orthogonal cover code group may be all uplink shared channel repetition(s) within the orthogonal cover code group. For example, the processing time for piggybacking of the uplink control information may be based on the first uplink shared channel repetition within an orthogonal cover code group including the at least one of the uplink shared channel repetition(s).

For example, redundancy versions for the uplink shared channel repetition(s) may be same within an orthogonal cover code group related to the orthogonal cover code and may be different among orthogonal cover code groups related to the orthogonal cover code.

For example, a redundancy version for the uplink shared channel repetition(s) may be same among orthogonal cover code groups related to the orthogonal cover code.

For example, the orthogonal cover code may be applied between the uplink shared channel repetition(s) based on that power consistency and phase continuity are maintained.

For example, based on that one or more of the uplink shared channel repetition(s) are dropped, uplink shared channel repetition(s) within an orthogonal cover code group including the one or more uplink shared channel repetition(s) may be dropped.

For example, the orthogonal cover code may be applied between the uplink shared channel repetition(s), based on a resource grid on a time domain.

The proposed method can be applied to devices based on various embodiments of the present disclosure. First, the processor 102 of the device 100 may obtain information related to an orthogonal cover code. In addition, the processor 102 of the device 100 may perform uplink shared channel repetition(s) based on the orthogonal cover code. For example, the orthogonal cover code may be applied between the uplink shared channel repetition(s). For example, based on overlapping between at least one of the uplink shared channel repetition(s) and an uplink control channel, uplink control information related to the uplink control channel may be multiplexed on an uplink shared channel.

Based on an embodiment of the present disclosure, a device may be provided. For example, the device may include: at least one transceiver; at least one processor; and at least one memory connected to the at least one processor and storing instructions. For example, the instructions, based on being executed by the at least one processor, may cause the device to perform operations comprising: obtaining information related to an orthogonal cover code; and performing uplink shared channel repetition(s) based on the orthogonal cover code. For example, the orthogonal cover code may be applied between the uplink shared channel repetition(s). For example, based on overlapping between at least one of the uplink shared channel repetition(s) and an uplink control channel, uplink control information related to the uplink control channel may be multiplexed on an uplink shared channel.

Based on an embodiment of the present disclosure, a processing device adapted to control a device may be provided. For example, the processing device may include: at least one processor; and at least one memory connected to the at least one processor and storing instructions. For example, the instructions, based on being executed by the at least one processor, may cause the device to perform operations comprising: obtaining information related to an orthogonal cover code; and performing uplink shared channel repetition(s) based on the orthogonal cover code. For example, the orthogonal cover code may be applied between the uplink shared channel repetition(s). For example, based on overlapping between at least one of the uplink shared channel repetition(s) and an uplink control channel, uplink control information related to the uplink control channel may be multiplexed on an uplink shared channel.

Based on an embodiment of the present disclosure, a non-transitory computer-readable storage medium storing instructions may be provided. For example, the instructions, when executed, may cause a device to perform operations comprising: obtaining information related to an orthogonal cover code; and performing uplink shared channel repetition(s) based on the orthogonal cover code. For example, the orthogonal cover code may be applied between the uplink shared channel repetition(s). For example, based on overlapping between at least one of the uplink shared channel repetition(s) and an uplink control channel, uplink control information related to the uplink control channel may be multiplexed on an uplink shared channel.

FIG. 14 shows a method for a base station to perform wireless communication, based on an embodiment of the present disclosure. The embodiment of FIG. 14 may be combined with various embodiments of the present disclosure.

Referring to FIG. 14, in step S1410, the base station may transmit information related to an orthogonal cover code. In step S1420, the base station may receive uplink shared channel repetition(s) based on the orthogonal cover code. For example, the orthogonal cover code may be applied between the uplink shared channel repetition(s). For example, based on overlapping between at least one of the uplink shared channel repetition(s) and an uplink control channel, uplink control information related to the uplink control channel may be multiplexed on an uplink shared channel.

For example, based on the overlapping between the at least one of the uplink shared channel repetition(s) and the uplink control channel, the uplink control information may be multiplexed on uplink shared channel repetition(s) within an orthogonal cover code group including the uplink shared channel.

For example, the uplink shared channel repetition(s) within the orthogonal cover code group may be all uplink shared channel repetition(s) within the orthogonal cover code group.

For example, based on the overlapping between the at least one of the uplink shared channel repetition(s) and the uplink control channel, the uplink control information may be multiplexed on the uplink shared channel, and the orthogonal cover code may not be applied within an orthogonal cover code group including the uplink shared channel.

For example, based on the overlapping between the at least one of the uplink shared channel repetition(s) and the uplink control channel, the uplink control information may be multiplexed on the uplink shared channel, and the orthogonal cover code may not be applied within the uplink shared channel repetition(s).

For example, the orthogonal cover code may be an inter-slot orthogonal cover code.

For example, the inter-slot orthogonal cover code may be an orthogonal cover code applied between the uplink shared channel repetition(s) where the uplink shared channel is repeated on a slot basis.

For example, based on the overlapping between the at least one of the uplink shared channel repetition(s) and an uplink control channel, and based on processing time for piggybacking of the uplink control information remaining, the uplink control information may be multiplexed on the uplink shared channel. For example, the processing time for piggybacking of the uplink control information may be based on the first uplink shared channel repetition within an orthogonal cover code group including the at least one of the uplink shared channel repetition(s).

For example, based on the overlapping between the at least one of the uplink shared channel repetition(s) and an uplink control channel, and based on no processing time for piggybacking of the uplink control information remaining, the uplink control information may be transmitted on the uplink control channel, and uplink shared channel repetition(s) within an orthogonal cover code group including the uplink shared channel are dropped. For example, the uplink shared channel repetition(s) within the orthogonal cover code group may be all uplink shared channel repetition(s) within the orthogonal cover code group. For example, the processing time for piggybacking of the uplink control information may be based on the first uplink shared channel repetition within an orthogonal cover code group including the at least one of the uplink shared channel repetition(s).

For example, redundancy versions for the uplink shared channel repetition(s) may be same within an orthogonal cover code group related to the orthogonal cover code and may be different among orthogonal cover code groups related to the orthogonal cover code.

For example, a redundancy version for the uplink shared channel repetition(s) may be same among orthogonal cover code groups related to the orthogonal cover code.

For example, the orthogonal cover code may be applied between the uplink shared channel repetition(s) based on that power consistency and phase continuity are maintained.

For example, based on that one or more of the uplink shared channel repetition(s) are dropped, uplink shared channel repetition(s) within an orthogonal cover code group including the one or more uplink shared channel repetition(s) may be dropped.

For example, the orthogonal cover code may be applied between the uplink shared channel repetition(s), based on a resource grid on a time domain.

The proposed method can be applied to devices based on various embodiments of the present disclosure. First, the processor 202 of the base station 200 may control the transceiver 206 to transmit information related to an orthogonal cover code. In addition, the processor 202 of the base station 200 may control the transceiver 206 to receive uplink shared channel repetition(s) based on the orthogonal cover code. For example, the orthogonal cover code may be applied between the uplink shared channel repetition(s). For example, based on overlapping between at least one of the uplink shared channel repetition(s) and an uplink control channel, uplink control information related to the uplink control channel may be multiplexed on an uplink shared channel.

Based on an embodiment of the present disclosure, a base station may be provided. For example, the base station may include: at least one transceiver; at least one processor; and at least one memory connected to the at least one processor and storing instructions. For example, the instructions, based on being executed by the at least one processor, may cause the base station to perform operations comprising: transmitting information related to an orthogonal cover code; and receiving uplink shared channel repetition(s) based on the orthogonal cover code. For example, the orthogonal cover code may be applied between the uplink shared channel repetition(s). For example, based on overlapping between at least one of the uplink shared channel repetition(s) and an uplink control channel, uplink control information related to the uplink control channel may be multiplexed on an uplink shared channel.

Based on an embodiment of the present disclosure, a processing device adapted to control a base station may be provided. For example, the processing device may include: at least one processor; and at least one memory connected to the at least one processor and storing instructions. For example, the instructions, based on being executed by the at least one processor, may cause the base station to perform operations comprising: transmitting information related to an orthogonal cover code; and receiving uplink shared channel repetition(s) based on the orthogonal cover code. For example, the orthogonal cover code may be applied between the uplink shared channel repetition(s). For example, based on overlapping between at least one of the uplink shared channel repetition(s) and an uplink control channel, uplink control information related to the uplink control channel may be multiplexed on an uplink shared channel.

Based on an embodiment of the present disclosure, a non-transitory computer-readable storage medium storing instructions may be provided. For example, the instructions, when executed, may cause a base station to perform operations comprising: transmitting information related to an orthogonal cover code; and receiving uplink shared channel repetition(s) based on the orthogonal cover code. For example, the orthogonal cover code may be applied between the uplink shared channel repetition(s). For example, based on overlapping between at least one of the uplink shared channel repetition(s) and an uplink control channel, uplink control information related to the uplink control channel may be multiplexed on an uplink shared channel.

Various embodiments of the present disclosure may be combined with each other.

The proposed method may be applied to an apparatus described below. First, a processor 202 of a receiving UE may configure at least one bandwidth part (BWP). Then, the processor 202 of the receiving UE may control a transceiver 206 of the receiving UE to receive, from a transmitting UE, a physical channel related to inter-UE communication (e.g., SL communication) and/or a reference signal related to inter-UE communication (e.g., SL communication) on the at least one BWP.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

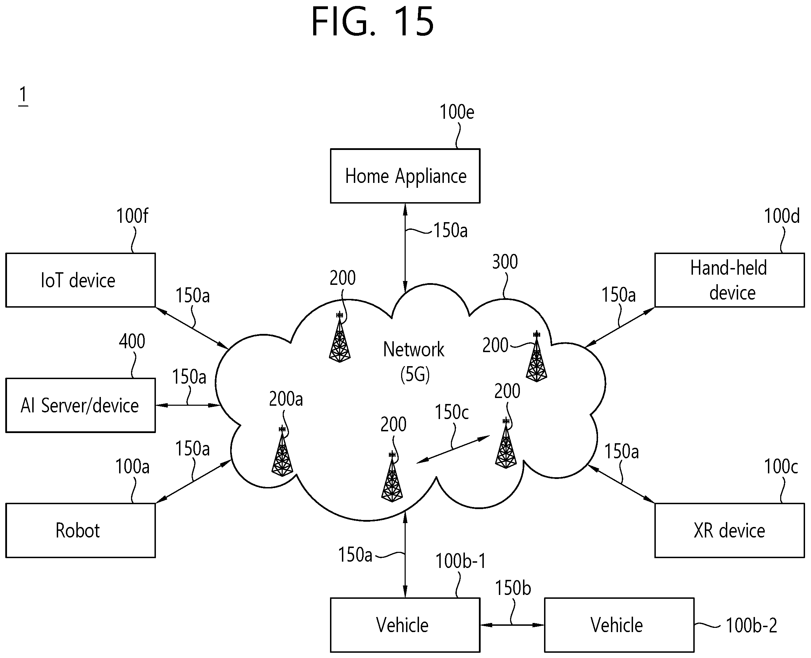

FIG. 15 shows a communication system 1, based on an embodiment of the present disclosure. The embodiment of FIG. 15 may be combined with various embodiments of the present disclosure.

Referring to FIG. 15, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone) and/or an Aerial Vehicle (AV) (e.g., Advanced Air Mobility (AAM)). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

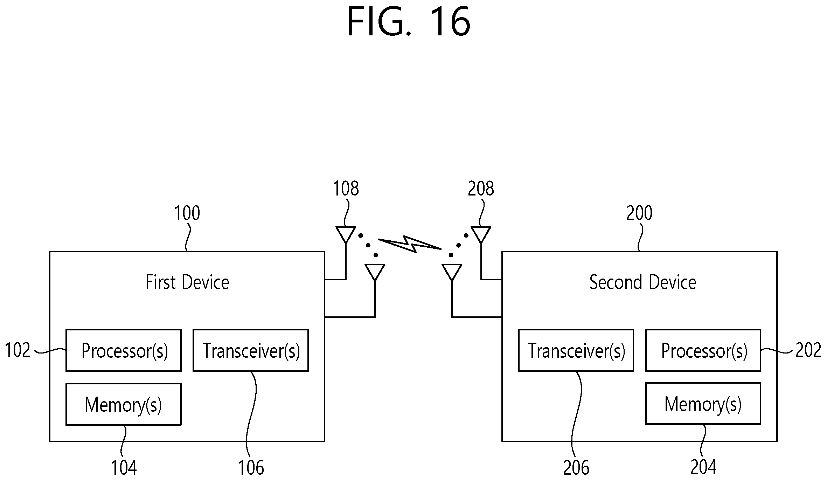

FIG. 16 shows wireless devices, based on an embodiment of the present disclosure. The embodiment of FIG. 16 may be combined with various embodiments of the present disclosure.

Referring to FIG. 16, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 15.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 206 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cache memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

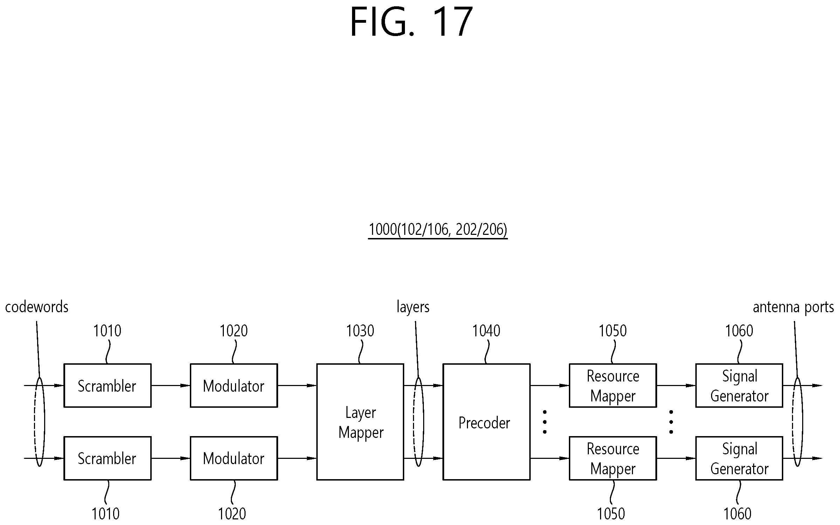

FIG. 17 shows a signal process circuit for a transmission signal, based on an embodiment of the present disclosure. The embodiment of FIG. 17 may be combined with various embodiments of the present disclosure.

Referring to FIG. 17, a signal processing circuit 1000 may include scramblers 1010, modulators 1020, a layer mapper 1030, a precoder 1040, resource mappers 1050, and signal generators 1060. An operation/function of FIG. 17 may be performed, without being limited to, the processors 102 and 202 and/or the transceivers 106 and 206 of FIG. 16. Hardware elements of FIG. 17 may be implemented by the processors 102 and 202 and/or the transceivers 106 and 206 of FIG. 16. For example, blocks 1010 to 1060 may be implemented by the processors 102 and 202 of FIG. 16. Alternatively, the blocks 1010 to 1050 may be implemented by the processors 102 and 202 of FIG. 16 and the block 1060 may be implemented by the transceivers 106 and 206 of FIG. 16.

Codewords may be converted into radio signals via the signal processing circuit 1000 of FIG. 17. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 17. For example, the wireless devices (e.g., 100 and 200 of FIG. 16) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

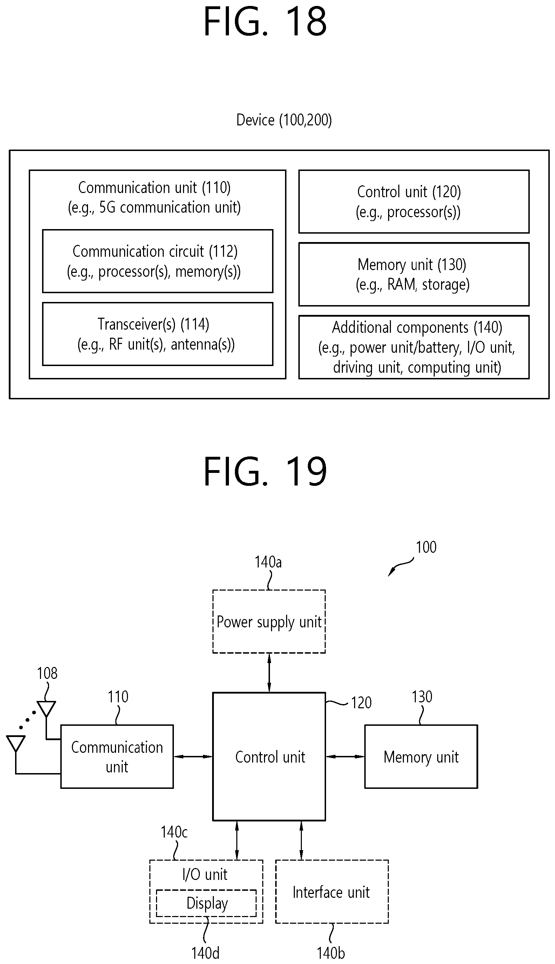

FIG. 18 shows another example of a wireless device, based on an embodiment of the present disclosure. The wireless device may be implemented in various forms according to a use-case/service (refer to FIG. 15). The embodiment of FIG. 18 may be combined with various embodiments of the present disclosure.

Referring to FIG. 18, wireless devices 100 and 200 may correspond to the wireless devices 100 and 200 of FIG. 16 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 16. For example, the transceiver(s) 114 may include the one or more transceivers 106 and 206 and/or the one or more antennas 108 and 208 of FIG. 16. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 15), the vehicles (100b-1 and 100b-2 of FIG. 15), the XR device (100c of FIG. 15), the hand-held device (100d of FIG. 15), the home appliance (100e of FIG. 15), the IoT device (100f of FIG. 15), a digital broadcast terminal, a hologram device, a public safety device, an MTC device, a medicine device, a fintech device (or a finance device), a security device, a climate/environment device, the AI server/device (400 of FIG. 15), the BSs (200 of FIG. 15), a network node, etc. The wireless device may be used in a mobile or fixed place according to a use-example/service.

In FIG. 18, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 18 will be described in detail with reference to the drawings.

FIG. 19 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 19 may be combined with various embodiments of the present disclosure.

Referring to FIG. 19, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 18, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

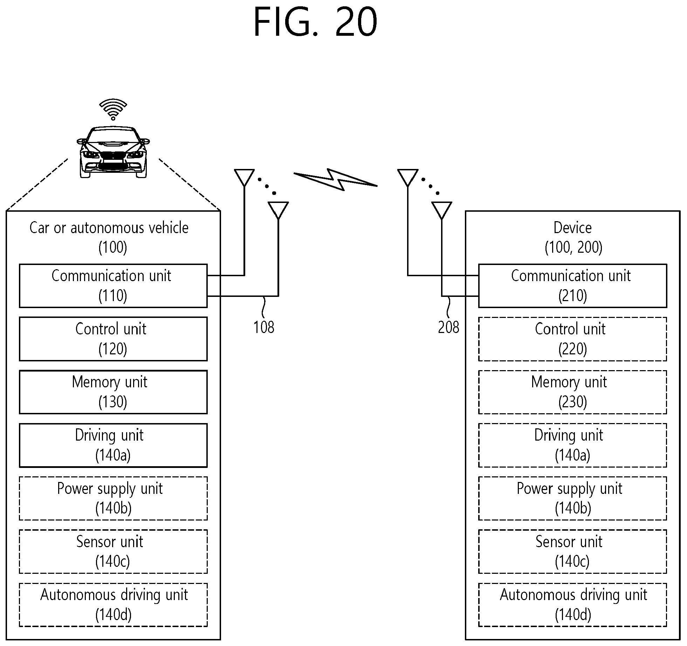

FIG. 20 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 20 may be combined with various embodiments of the present disclosure.

Referring to FIG. 20, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 18, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method, comprising:
obtaining information related to an orthogonal cover code; and
performing uplink shared channel repetitions based on the orthogonal cover code,
wherein the orthogonal cover code is applied between the uplink shared channel repetitions, and
wherein, based on overlapping between at least one of the uplink shared channel repetitions and an uplink control channel, uplink control information related to the uplink control channel is multiplexed on an uplink shared channel.

2. The method of claim 1,
wherein, based on the overlapping between the at least one of the uplink shared channel repetitions and the uplink control channel, the uplink control information is multiplexed on uplink shared channel repetitions within an orthogonal cover code group including the uplink shared channel.

3. The method of claim 2,
wherein the uplink shared channel repetitions within the orthogonal cover code group are all uplink shared channel repetitions within the orthogonal cover code group.

4. The method of claim 1,
wherein, based on the overlapping between the at least one of the uplink shared channel repetitions and the uplink control channel, the uplink control information is multiplexed on the uplink shared channel, and the orthogonal cover code is not applied within an orthogonal cover code group including the uplink shared channel.

5. The method of claim 1,
wherein, based on the overlapping between the at least one of the uplink shared channel repetitions and the uplink control channel, the uplink control information is multiplexed on the uplink shared channel, and the orthogonal cover code is not applied within the uplink shared channel repetitions.

6. The method of claim 1,
wherein the orthogonal cover code is an inter-slot orthogonal cover code.

7. The method of claim 6,
wherein the inter-slot orthogonal cover code is an orthogonal cover code applied between the uplink shared channel repetitions where the uplink shared channel is repeated on a slot basis.

8. The method of claim 1,
wherein, based on the overlapping between the at least one of the uplink shared channel repetitions and an uplink control channel, and based on processing time for piggybacking of the uplink control information remaining, the uplink control information is multiplexed on the uplink shared channel.

9. The method of claim 8,
wherein the processing time for piggybacking of the uplink control information is based on the first uplink shared channel repetition within an orthogonal cover code group including the at least one of the uplink shared channel repetitions.

10. The method of claim 8,
wherein, based on the overlapping between the at least one of the uplink shared channel repetitions and an uplink control channel, and based on no processing time for piggybacking of the uplink control information remaining, the uplink control information is transmitted on the uplink control channel, and uplink shared channel repetitions within an orthogonal cover code group including the uplink shared channel are dropped.

11. The method of claim 10,
wherein the uplink shared channel repetitions within the orthogonal cover code group are all uplink shared channel repetitions within the orthogonal cover code group.

12. The method of claim 10,
wherein the processing time for piggybacking of the uplink control information is based on the first uplink shared channel repetition within an orthogonal cover code group including the at least one of the uplink shared channel repetitions.

13. The method of claim 1,
wherein redundancy versions for the uplink shared channel repetitions are same within an orthogonal cover code group related to the orthogonal cover code and are different among orthogonal cover code groups related to the orthogonal cover code.

14. The method of claim 1,
wherein a redundancy version for the uplink shared channel repetitions is same among orthogonal cover code groups related to the orthogonal cover code.

15. The method of claim 1,
wherein the orthogonal cover code is applied between the uplink shared channel repetitions based on that power consistency and phase continuity are maintained.

16. The method of claim 1,
wherein, based on that one or more of the uplink shared channel repetitions are dropped, uplink shared channel repetitions within an orthogonal cover code group including the one or more uplink shared channel repetitions are dropped.

17. The method of claim 1,
wherein the orthogonal cover code is applied between the uplink shared channel repetitions, based on a resource grid on a time domain.

18. A first device, comprising:
at least one transceiver;
at least one processor; and
at least one memory connected to the at least one processor and storing instructions that, based on being executed by the at least one processor, cause the first device to perform operations comprising:
obtaining information related to an orthogonal cover code; and
performing uplink shared channel repetitions based on the orthogonal cover code,
wherein the orthogonal cover code is applied between the uplink shared channel repetitions, and
wherein, based on overlapping between at least one of the uplink shared channel repetitions and an uplink control channel, uplink control information related to the uplink control channel is multiplexed on an uplink shared channel.

19. A processing device adapted to control a first device, the processing device comprising:
at least one processor; and
at least one memory connected to the at least one processor and storing instructions that, based on being executed by the at least one processor, cause the first device to perform operations comprising:
obtaining information related to an orthogonal cover code; and
performing uplink shared channel repetitions based on the orthogonal cover code,
wherein the orthogonal cover code is applied between the uplink shared channel repetitions, and
wherein, based on overlapping between at least one of the uplink shared channel repetitions and an uplink control channel, uplink control information related to the uplink control channel is multiplexed on an uplink shared channel.

20. A non-transitory computer-readable storage medium storing instructions that, based on being executed, cause a first device to perform operations comprising:
obtaining information related to an orthogonal cover code; and
performing uplink shared channel repetitions based on the orthogonal cover code,
wherein the orthogonal cover code is applied between the uplink shared channel repetitions, and
wherein, based on overlapping between at least one of the uplink shared channel repetitions and an uplink control channel, uplink control information related to the uplink control channel is multiplexed on an uplink shared channel.

21. A method, comprising:
transmitting information related to an orthogonal cover code; and
receiving uplink shared channel repetitions based on the orthogonal cover code,
wherein the orthogonal cover code is applied between the uplink shared channel repetitions, and
wherein, based on overlapping between at least one of the uplink shared channel repetitions and an uplink control channel, uplink control information related to the uplink control channel is multiplexed on an uplink shared channel.

22. A second device adapted to perform wireless communication, the second device comprising:
at least one transceiver;
at least one processor; and
at least one memory connected to the at least one processor and storing instructions that, based on being executed by the at least one processor, cause the second device to perform operations comprising:
transmitting information related to an orthogonal cover code; and
receiving uplink shared channel repetitions based on the orthogonal cover code,
wherein the orthogonal cover code is applied between the uplink shared channel repetitions, and
wherein, based on overlapping between at least one of the uplink shared channel repetitions and an uplink control channel, uplink control information related to the uplink control channel is multiplexed on an uplink shared channel.

23. A processing device adapted to control a second device, the processing device comprising:
at least one processor; and
at least one memory connected to the at least one processor and storing instructions that, based on being executed by the at least one processor, cause the second device to perform operations comprising:
transmitting information related to an orthogonal cover code; and
receiving uplink shared channel repetitions based on the orthogonal cover code,
wherein the orthogonal cover code is applied between the uplink shared channel repetitions, and
wherein, based on overlapping between at least one of the uplink shared channel repetitions and an uplink control channel, uplink control information related to the uplink control channel is multiplexed on an uplink shared channel.

24. A non-transitory computer-readable storage medium storing instructions that, based on being executed, cause a second device to perform operations comprising:
transmitting information related to an orthogonal cover code; and
receiving uplink shared channel repetitions based on the orthogonal cover code,
wherein the orthogonal cover code is applied between the uplink shared channel repetitions, and
wherein, based on overlapping between at least one of the uplink shared channel repetitions and an uplink control channel, uplink control information related to the uplink control channel is multiplexed on an uplink shared channel.
